# FASCICULE DE BREVET EUROPEEN

(11) **EP 4 072 876 B1**
(45) Date de publication et mention de la délivrance du brevet: **02.04.2025**
(21) Numéro de dépôt: 20828550.2
(22) Date de dépôt: 02.12.2020
(51) Int. Cl.: B60H 1/00, B60H 1/32

(54) **SYSTÈME DE TRAITEMENT THERMIQUE DESTINÉ À UN VÉHICULE AUTOMOBILE**
HEISSBEHANDLUNGSSYSTEM FÜR EIN KRAFTFAHRZEUG
HEAT TREATMENT SYSTEM FOR A MOTOR VEHICLE

(30) Priorité: 09.12.2019 FR 1913921
(43) Date de publication de la demande: 19.10.2022
(73) Titulaire: VALEO SYSTEMES THERMIQUES, 78320 Le Mesnil Saint-Denis (FR)
(72) Inventeur: YAHIA, Mohamed, 78320 LE MESNIL SAINT-DENIS (FR); KARL, Stefan, 78320 LE MESNIL SAINT-DENIS (FR); NICOLAS, Bertrand, 78320 LE MESNIL SAINT-DENIS (FR)
(74) Mandataire: Valeo Systèmes Thermiques
(86) Numéro de dépôt international: PCT/FR2020/052250
(87) Numéro de publication internationale: WO 2021/116565

(56) Documents cités:
- DE-A1- 10 226 851
- KR-A- 20170 113 948
- US-A1- 2014 124 159
- US-A1- 2016 010 534

## Description

La présente invention se rapporte au domaine des boucles de fluide caloporteur fonctionnant avec un circuit de fluide réfrigérant. L'invention a pour objet un système de traitement thermique comprenant au moins une boucle de fluide caloporteur et un circuit de fluide réfrigérant. Un tel système de traitement thermique est connu du document US 2014/124159 A1.

Un circuit de fluide réfrigérant est généralement associé à une installation de ventilation, de chauffage et/ou de climatisation d'un habitacle de véhicule pour traiter thermiquement un flux d'air extérieur au véhicule se dirigeant vers l'habitacle. En effet, un tel circuit permet, à l'aide des changements d'état du fluide réfrigérant, de chauffer et/ou de refroidir un flux d'air envoyé à l'intérieur de l'installation de ventilation, de chauffage et/ou de climatisation.

De tels systèmes de traitement thermique sont généralement intégrés sur des véhicules dont la chaîne de traction est électrique, c'est-à-dire qu'elle comporte un moteur fonctionnant au moins partiellement à l'énergie électrique alimenté par un ou plusieurs dispositifs de stockage électrique embarqué sur le véhicule. L'ensemble de ces éléments supportant mal les changements de températures trop importants, on comprend que le système de traitement thermique assure leur régulation thermique, plus particulièrement leur refroidissement.

Ces systèmes de traitement thermique sont le plus souvent au moins en partie agencés en face avant des véhicules. Plus exactement, ces systèmes de traitement thermique comprennent classiquement au moins un échangeur thermique qui est agencé au niveau de cette face avant. Dans un contexte de limitation de l'encombrement des équipements aménagés en face avant, la réduction des dimensions d'un tel échangeur thermique s'accompagne d'une perte d'efficacité des systèmes de traitement thermique et donc de sa capacité de refroidissement des différents éléments électriques susnommés.

Afin d'optimiser les performances du circuit de fluide réfrigérant, il est connu d'intégrer au moins un échangeur thermique configuré pour permettre le sous-refroidissement du fluide réfrigérant par échange thermique avec le fluide caloporteur circulant dans la boucle de fluide caloporteur. Des architectures classiques d'une telle boucle comprennent classiquement un radiateur disposé en face avant du véhicule en aval de l'échangeur thermique selon le sens du flux d'air au travers de l'échangeur thermique.

Néanmoins, il peut être nécessaire d'inverser une telle architecture de sorte que le radiateur soit disposé en amont de l'échangeur thermique selon le sens de circulation du flux d'air extérieur à l'habitacle au travers de ce radiateur et de cet échangeur thermique. Un inconvénient d'une telle architecture réside dans le fait que l'échangeur thermique est inapte à assurer un sous-refroidissement du fluide réfrigérant postérieurement à sa phase de condensation, réduisant alors encore davantage les performances du système de traitement thermique.

Une telle perte de performance est particulièrement notable lorsque le dispositif de stockage électrique du véhicule est utilisé d'une manière qui provoque un échauffement important de celui-ci, par exemple lors d'une phase de charge rapide du dispositif de stockage. La charge rapide consiste à charger le dispositif de stockage électrique sous une tension et un ampérage élevés de manière à charger le dispositif de stockage électrique en un temps court de quelques dizaines de minutes. Cette charge rapide implique un échauffement du dispositif de stockage électrique supérieur à celui observer lors du fonctionnement usuel du dispositif de stockage qu'il convient donc de traiter.

De plus, lors d'une phase de charge rapide, il peut être nécessaire de maintenir un niveau de confort thermique acceptable à l'intérieur de l'habitacle, c'est-à-dire que le circuit de fluide réfrigérant peut être amené à devoir simultanément assurer le traitement thermique de l'habitacle et le traitement thermique du dispositif de stockage. De telles demandes impliquent une performance du système de traitement qui requiert un dimensionnement du système, et notamment de l'échangeur thermique disposé en face avant, qui le rend peu compatible avec les contraintes de dimensionnement des faces avant des véhicules automobiles actuels, notamment les véhicules mus par un moteur électrique.

La présente invention s'inscrit dans ce contexte et vise à résoudre ces différents inconvénients en proposant un système de traitement thermique destiné à un véhicule comprenant au moins un circuit de fluide réfrigérant et au moins une boucle de fluide caloporteur :
- le circuit de fluide réfrigérant comprenant au moins un dispositif de compression, un organe de détente, un premier échangeur thermique configuré pour mettre en œuvre un échange thermique entre le fluide réfrigérant et un flux d'air extérieur à un habitacle du véhicule, un deuxième échangeur thermique configuré pour mettre en œuvre un échange thermique entre le fluide réfrigérant et le fluide caloporteur circulant dans la boucle et un quatrième échangeur thermique configuré pour mettre en œuvre un échange thermique entre le fluide réfrigérant et un flux d'air intérieur à l'habitacle ;
- la boucle de fluide caloporteur comprenant, sur une ligne principale, le deuxième échangeur thermique et au moins un radiateur primaire configuré pour mettre en œuvre un échange de chaleur entre le flux d'air extérieur à l'habitacle du véhicule et le fluide caloporteur ;

Le système de traitement est caractérisé en ce que le circuit de fluide réfrigérant comprend un troisième échangeur thermique configuré pour mettre en œuvre un échange thermique entre le fluide réfrigérant et le flux d'air extérieur ou entre le fluide réfrigérant et le fluide caloporteur et en ce que le premier échangeur thermique, le deuxième échangeur thermique et le troisième échangeur thermique sont disposés dans le circuit de fluide réfrigérant entre une sortie du dispositif de compression et une entrée du moyen de détente, le radiateur primaire étant disposö en amont du premier échangeur thermique selon un sens de circulation du flux d'air extérieur.

Le circuit de fluide réfrigérant du système de traitement thermique selon l'invention est configuré pour fonctionner alternativement en mode pompe à chaleur, de sorte à réchauffer un flux d'air intérieur avant de l'envoyer dans l'habitacle, ou en mode climatisation, afin de refroidir le flux d'air intérieur avant de l'envoyer dans l'habitacle.

Selon le mode de fonctionnement du circuit du système de traitement thermique, le premier échangeur thermique et le quatrième échangeur thermique peuvent ainsi être configurés pour fonctionner comme un condenseur ou comme un évaporateur, vis-à-vis du fluide réfrigérant.

Également, afin d'optimiser le rendement du système de traitement thermique, au moins l'un des échangeurs thermiques peut être configuré pour assurer le sous-refroidissement du fluide réfrigérant liquide. Par « sous-refroidissement » on entend l'abaissement de la température du fluide réfrigérant au-dessous de sa température de condensation.

Avantageusement, dans la présente invention, au moins le deuxième échangeur thermique et/ou le troisième échangeur thermique sont configurés pour assurer le sous-refroidissement du fluide réfrigérant circulant dans le circuit.

Selon un mode de réalisation particulier de l'invention, le deuxième échangeur thermique et le radiateur primaire sont disposés dans la ligne principale de la boucle de fluide caloporteur de manière à ce que le radiateur primaire décharge dans le flux d'air extérieur des calories captées par le deuxième échangeur thermique.

En d'autres termes, dans la boucle de fluide caloporteur, le deuxième échangeur thermique est disposé en aval du radiateur primaire selon un sens de circulation du fluide caloporteur dans la boucle de fluide caloporteur.

Ainsi, les calories captées par le fluide caloporteur au niveau du deuxième échangeur thermique sont déchargées dans le flux d'air extérieure via le radiateur primaire, ce qui assure un retour du fluide caloporteur à une température significativement inférieure à la température du fluide réfrigérant qui entre dans le deuxième échangeur thermique.

Selon l'invention, le radiateur primaire est disposé en amont du premier échangeur thermique selon un sens de circulation du flux d'air extérieur.

Particulièrement, le radiateur primaire de la boucle de fluide caloporteur est directement disposé en amont du premier échangeur thermique du circuit de fluide réfrigérant selon le sens de circulation du flux d'air extérieur qui entre dans la face avant du véhicule de sorte que le flux d'air réchauffé par échange thermique avec le radiateur primaire est directement envoyé vers le premier échangeur thermique.

Selon un mode de réalisation particulier de l'invention, la boucle de fluide caloporteur est thermiquement couplée à au moins un élément de la chaîne de traction électrique du véhicule.

Selon un autre aspect de l'invention, le circuit de fluide réfrigérant est un circuit fermé comprenant au moins une branche principale sur laquelle sont successivement agencés au moins le dispositif de compression, le premier échangeur thermique, le deuxième échangeur thermique, le troisième échangeur thermique, l'organe de détente, appelé ci-après premier organe de détente, et le quatrième échangeur thermique, le circuit de fluide réfrigérant comprenant une deuxième branche qui s'étend depuis un point de divergence, disposé entre une sortie du troisième échangeur thermique et une entrée du quatrième échangeur thermique, et un point de convergence, disposé entre une sortie du quatrième échangeur thermique et une entrée du dispositif de compression, la deuxième branche comprenant au moins un organe de détente, dit deuxième organe de détente, et un cinquième échangeur thermique thermiquement couplé à un dispositif de stockage électrique du véhicule. On entend par « couplé thermiquement » le fait que cinquième échangeur thermique soit configuré pour permettre un refroidissement direct ou indirect du dispositif de stockage électrique. Par exemple, le cinquième échangeur thermique peut être configuré pour mettre en œuvre un échange de chaleur entre le fluide réfrigérant et le dispositif de stockage électrique, ce dernier étant alors agencé au contact du cinquième échangeur thermique. Alternativement, le cinquième échangeur thermique peut être configuré pour mettre en œuvre un échange de chaleur entre le fluide réfrigérant et du liquide caloporteur compris sur une deuxième boucle du système de traitement thermique, la deuxième boucle comprenant ce dispositif de stockage électrique.

De la sorte, le système de traitement thermique peut être configuré pour dissiper les calories générées par au moins l'un des éléments de la chaîne de traction, tel qu'un moteur fonctionnant au moins partiellement à l'énergie électrique ou un module électronique de commande le contrôlant, et/ou par le dispositif de stockage électrique.

Il est entendu que les qualificatifs « premier », « deuxième » ont pour vocation de distinguer des éléments similaires dudit système et ne confèrent pas une quelconque hiérarchie des composants du système de traitement thermique.

Selon une caractéristique d'un mode de réalisation particulier de l'invention, le circuit de fluide réfrigérant peut comprendre une troisième branche qui s'étend entre un point de divergence, appelé ci-après deuxième point de divergence, disposé entre la sortie du dispositif de compression et une entrée du premier échangeur thermique, et un point de convergence, appelé ci-après deuxième point de convergence, disposé entre la sortie du troisième échangeur thermique et l'entrée du quatrième échangeur thermique, la troisième branche comprenant au moins un échangeur de chaleur utilisé comme condenseur.

Notamment, l'échangeur de chaleur peut être configuré pour mettre en œuvre un échange thermique entre le fluide réfrigérant et un fluide caloporteur circulant dans une deuxième boucle additionnelle de fluide caloporteur. Alternativement, l'échangeur de chaleur peut être configuré pour mettre en œuvre un échange thermique entre le fluide réfrigérant et un flux d'air intérieur destiné à être envoyé dans l'habitacle du véhicule de sorte à permettre le traitement thermique dudit flux d'air intérieur.

Selon l'invention, le circuit de fluide réfrigérant peut comprendre une quatrième branche qui s'étend entre un point de divergence, appelé ci-après troisième point de divergence, disposé entre la sortie du troisième échangeur thermique et l'entrée du quatrième échangeur thermique, et un point de convergence, appelé ci-après troisième point de convergence, disposé entre la sortie du dispositif de compression et l'entrée du premier échangeur thermique, la quatrième branche comprenant au moins un organe de détente dit troisième organe de détente.

Selon une caractéristique optionelle de l'invention, le circuit de fluide réfrigérant peut comprendre une cinquième branche qui s'étend entre un point de divergence, appelé ci-après quatrième point de divergence, disposé entre une sortie du deuxième échangeur thermique et une entrée du troisième échangeur thermique, et un point convergence, appelé ci-après quatrième point de convergence, disposé entre la sortie du quatrième échangeur thermique et l'entrée du dispositif de compression.

Selon un mode de réalisation particulier de l'invention le système de traitement thermique peut, en outre, comprendre un échangeur thermique interne agencé entre deux portions distinctes du circuit de fluide réfrigérant, notamment une première portion, comprise entre la sortie du dispositif de compression et l'entrée du premier organe de détente, au niveau de laquelle le fluide réfrigérant est soumis à une haute pression, et une deuxième portion du circuit de fluide réfrigérant, comprise entre une sortie du premier organe de détente et l'entrée du dispositif de compression, dans laquelle le fluide réfrigérant est soumis à une basse pression, inférieure à la haute pression.

Selon un premier, un deuxième et un troisième mode de réalisation, le troisième échangeur thermique est configuré pour mettre en œuvre un échange thermique entre le fluide réfrigérant et le flux d'air extérieur à l'habitacle.

Selon un aspect de ces modes de réalisation, le troisième échangeur thermique est disposé en amont du premier échangeur thermique selon un sens de circulation S3 du flux d'air extérieur à l'habitacle.

Particulièrement, le troisième échangeur thermique est directement disposé en amont du premier échangeur thermique selon le sens de circulation du flux d'air extérieur qui entre dans la face avant du véhicule de sorte que le flux d'air réchauffé par échange thermique avec le troisième échangeur thermique est directement envoyé vers le premier échangeur thermique.

Selon un aspect du premier mode de réalisation, le circuit de fluide réfrigérant peut comprendre au moins une bouteille disposée entre le premier échangeur thermique et le deuxième échangeur thermique. Une telle bouteille assure que seule une fraction liquide du fluide réfrigérant sortant du premier échangeur thermique soit amenée vers le deuxième échangeur thermique. Ainsi, lorsque le premier échangeur thermique est utilisé comme condenseur, le deuxième échangeur thermique et le troisième échangeur thermique peuvent être utilisés comme sous-refroidisseur du fluide réfrigérant, optimisant de ce fait le coefficient de performances du système de traitement thermique.

Selon un aspect du deuxième mode de réalisation, le circuit de fluide réfrigérant peut comprendre au moins une bouteille intégrée dans le premier échangeur thermique. Ainsi, lorsque le premier échangeur thermique fonctionne en tant que condenseur, au moins une section terminale dudit échangeur thermique, uniquement alimentée en fluide réfrigérant à l'état liquide, peut être utilisée comme sous-refroidisseur du fluide réfrigérant. Il en résulte que le système de traitement thermique met en œuvre trois sous-refroidissements successifs du fluide réfrigérant, un premier au niveau de la section terminale du premier échangeur thermique, un deuxième dans le deuxième échangeur thermique et un troisième dans le troisième échangeur thermique, optimisant davantage les performances du système sans pour autant augment tout en limitant les dimensions des différents échangeurs thermiques disposés en face avant du véhicule.

Selon le troisième mode de réalisation, la boucle de fluide caloporteur peut comprendre une deuxième ligne qui s'étend en dérivation de la ligne principale entre un point de dérivation, disposé entre une sortie de l'élément de mise en circulation et une entrée du radiateur primaire, et un point de raccordement, disposé entre une sortie du radiateur primaire et une entrée du deuxième échangeur thermique, la deuxième ligne comprenant au moins un organe de contrôle du débit de fluide caloporteur.

A titre d'exemple, l'organe de contrôle du débit de fluide caloporteur peut être une vanne trois voies intégrée au niveau du point de dérivation. On comprend que l'organe de contrôle du débit de fluide caloporteur permet de diriger sélectivement le fluide caloporteur vers la ligne principale ou vers la deuxième ligne en autorisant et en interdisant la circulation de ce fluide caloporteur dans l'une ou l'autre de ces lignes.

Alternativement, la boucle de fluide caloporteur peut comprendre une pluralité d'organes de contrôle du débit, par exemple deux vannes deux voies, l'un étant installé dans la ligne principale et l'autre étant installé dans la deuxième ligne.

Selon des quatrième et cinquième modes de réalisation, le troisième échangeur thermique est configuré pour mettre en œuvre un échange thermique entre le fluide réfrigérant et le fluide caloporteur.

Selon un aspect de ces quatrième et cinquième modes de réalisation, la boucle de fluide caloporteur comprend une ligne de dérivation comprenant au moins le troisième échangeur thermique et un radiateur secondaire configuré pour mettre en œuvre un échange thermique entre le fluide caloporteur et le flux d'air extérieur, le radiateur secondaire étant disposé en amont du radiateur primaire selon le sens de circulation S3 du flux d'air extérieur à l'habitacle.

En d'autres termes, dans la boucle de fluide caloporteur selon ces modes de réalisation, le deuxième échangeur thermique et le troisième échangeur thermique sont aménagés en parallèle l'un par rapport à l'autre.

Particulièrement, le radiateur secondaire de la boucle de fluide caloporteur est directement disposé en amont du radiateur primaire selon le sens de circulation S3 du flux d'air extérieur qui entre dans la face avant du véhicule de sorte que le flux d'air réchauffé par échange thermique avec le radiateur secondaire est directement envoyé vers le radiateur primaire puis vers le premier échangeur thermique.

Selon un aspect du quatrième mode de réalisation, la ligne de dérivation s'étend entre un point de séparation, disposé entre la sortie de l'élément de mise en circulation du fluide caloporteur et l'entrée du radiateur primaire, et un point de jonction, disposé entre la sortie du deuxième échangeur thermique et une entrée de l'élément de mise en circulation.

Autrement formulé, selon le quatrième mode de réalisation, une partie du fluide caloporteur est envoyée vers le radiateur primaire tandis que l'autre partie est envoyée vers le radiateur secondaire, le fluide caloporteur circulant alors parallèlement, et selon un même sens de circulation, dans le radiateur primaire et dans le radiateur secondaire.

Selon un aspect du quatrième mode de réalisation et similairement au troisième mode de réalisation, la boucle de fluide caloporteur peut comprendre la deuxième ligne qui s'étend en dérivation de la ligne principale entre le point de dérivation, disposé entre la sortie de l'élément de mise en circulation et l'entrée du radiateur primaire, et le point de raccordement, disposé entre la sortie du radiateur primaire et l'entrée du deuxième échangeur thermique, la deuxième ligne comprenant au moins l'organe de contrôle du débit de fluide caloporteur.

Selon une caractéristique du cinquième mode de réalisation, la ligne de dérivation peut s'étendre entre le point de séparation, disposé entre la sortie du radiateur primaire et l'entrée du deuxième échangeur thermique, et le point de jonction, disposé entre la sortie du deuxième échangeur thermique et l'entrée de l'élément de mise en circulation.

En d'autres termes, le cinquième mode de réalisation, à la différence du quatrième mode de réalisation, assure qu'une partie du fluide caloporteur circule successivement dans le radiateur primaire puis dans le radiateur secondaire, de sorte à refroidir davantage ledit fluide caloporteur et donc à optimiser les performances du système de traitement thermique.

Un objet de la présente invention concerne également un véhicule automobile comprenant au moins un système de traitement thermique tel que précédemment exposé.

D'autres caractéristiques détails et avantages ressortiront plus clairement à la lecture de la description détaillée donnée ci-après à titre indicatif en relation avec les différents exemples de réalisation illustrés sur les figures suivantes :
La figure 1 est une représentation schématique d'un système de traitement thermique selon un premier et un deuxième mode de réalisation, ce système de traitement thermique comprenant au moins un circuit de fluide réfrigérant et une boucle d'un fluide caloporteur ;
La figure 2 illustre schématiquement un premier exemple de fonctionnement du système de traitement thermique représenté sur la figure 1 dans lequel le circuit de fluide réfrigérant fonctionne en mode refroidissement de l'habitacle ;
La figure 3 illustre schématiquement un deuxième exemple de fonctionnement du système de traitement thermique représenté sur la figure 1 dans lequel le circuit de fluide réfrigérant fonctionne en mode refroidissement d'un dispositif de stockage électrique du véhicule ;
La figure 4 illustre schématiquement le système de traitement thermique selon un troisième mode de réalisation ;
La figure 5 illustre le système de traitement thermique selon la figure 4, lorsqu'il met en œuvre le premier mode de fonctionnement, c'est-à-dire le refroidissement de l'habitacle ;
La figure 6 illustre le système de traitement thermique selon la figure 4, lorsqu'il met en œuvre un troisième mode de fonctionnement et que le circuit de fluide réfrigérant fonctionne en mode chauffage de l'habitacle ;
La figure 7 illustre schématiquement le système de traitement thermique selon un quatrième mode de réalisation ;
La figure 8 illustre schématiquement le système de traitement thermique représenté sur la figure 7 lorsqu'il fonctionne en mode refroidissement de l'habitacle ;
La figure 9 illustre schématiquement le système de traitement thermique représenté sur la figure 7 lorsque le circuit de fluide réfrigérant fonctionne en mode chauffage de l'habitacle ;
La figure 10 illustre schématiquement le système de traitement thermique selon un cinquième mode de réalisation ;
La figure 11 illustre schématiquement un premier exemple de fonctionnement du système de traitement thermique représenté sur la figure 10 dans lequel le circuit de fluide réfrigérant fonctionne en mode refroidissement de l'habitacle ;

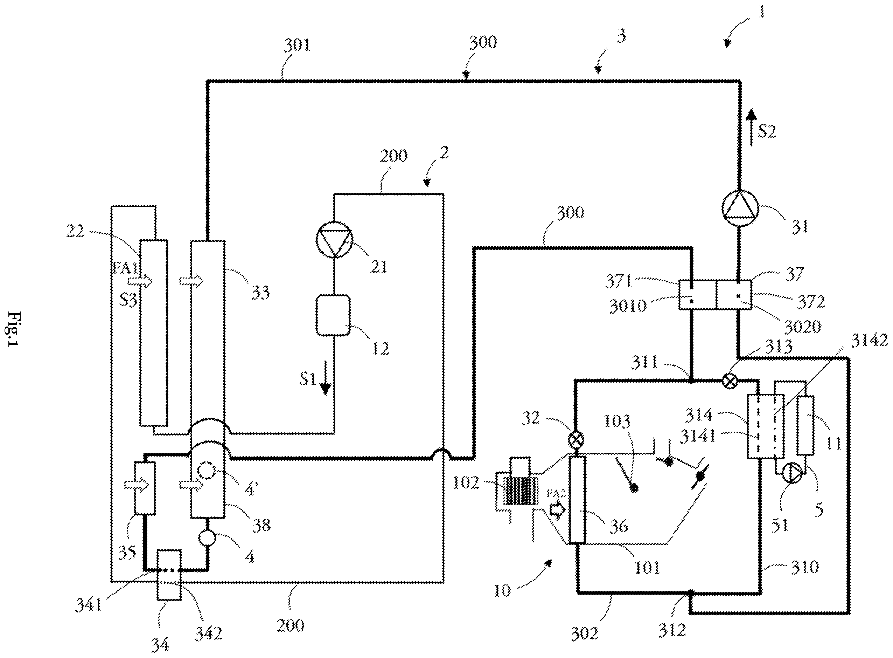

La figure 1 illustre schématiquement un système de traitement thermique 1 de plusieurs fonctions d'un véhicule automobile, parmi lesquelles on trouve au moins une installation 10 de ventilation, de chauffage et/ou de climatisation de l'habitacle, un dispositif de stockage électrique 11 et au moins élément 12 d'une chaîne de traction électrique du véhicule. Le système de traitement thermique 1 comprend une boucle 2 de fluide caloporteur, par exemple de l'eau glycolée, et un circuit 3 de fluide réfrigérant qui est destiné notamment au traitement thermique d'un habitacle du véhicule.

Dans l'ensemble de la description, les termes « amont », « aval », « entrée » et « sortie » se réfèrent à un sens de circulation S1 du fluide caloporteur dans la boucle 2 de fluide caloporteur ou à un sens de circulation S2 du fluide réfrigérant dans le circuit 3 de fluide réfrigérant ou d'un sens de circulation S3 d'un flux d'air extérieur FA1 à l'habitacle.

Le circuit 3 de fluide réfrigérant consiste en un circuit fermé qui comprend au moins une branche principale 300 sur laquelle sont disposés au moins un dispositif de compression 31, destiné à élever la pression du fluide réfrigérant et un organe de détente 32, dit premier organe de détente 32, destiné à diminuer la pression du fluide réfrigérant. Le circuit 3 de fluide réfrigérant comprend en outre au moins un premier échangeur thermique 33 configuré pour mettre en œuvre un échange de chaleur entre le fluide réfrigérant et le flux d'air extérieur FA1 à l'habitacle, au moins un deuxième échangeur thermique 34 configuré pour mettre en œuvre un échange thermique entre le fluide réfrigérant et le fluide caloporteur circulant dans la boucle 2, un troisième échangeur thermique 35 configuré pour mettre en œuvre un échange thermique entre le fluide réfrigérant et le flux d'air extérieur FA1 ou entre le fluide réfrigérant et le fluide caloporteur et un quatrième échangeur thermique 36 configuré pour mettre en œuvre un échange thermique entre le fluide réfrigérant et un flux d'air intérieur FA2 à l'habitacle.

Notamment, selon la présente invention, le premier échangeur thermique 33, le deuxième échangeur thermique 34 et le troisième échangeur thermique 35 sont disposés dans le circuit 3 de fluide réfrigérant entre une sortie du dispositif de compression 31 et une entrée du premier organe de détente 32. Dans le premier mode de réalisation tel qu'illustré à la figure 1, le troisième échangeur thermique 35 est configuré pour mettre en œuvre un échange thermique entre le fluide réfrigérant et le flux d'air extérieur FA1 et il est disposé en amont du premier échangeur thermique 33 selon le sens de circulation S3 du flux d'air extérieur FA1 à l'habitacle.

La boucle 2 de fluide caloporteur consiste en une boucle fermée comprenant une ligne principale 200 sur laquelle sont disposés un élément de mise en circulation 21 du fluide caloporteur, tel qu'une pompe, au moins le deuxième échangeur thermique 34 et au moins un radiateur primaire 22 configuré pour mettre en œuvre un échange thermique entre le flux d'air extérieur FA1 à l'habitacle et le fluide caloporteur. Il est à noter que, dans le deuxième échangeur thermique 34, les différents fluides circulant ne se mélangent pas et que l'échange thermique entre ces deux fluides se fait par conduction.

Également, la boucle 2 de fluide caloporteur est thermiquement couplée à l'au moins un élément 12 de la chaîne de traction électrique du véhicule, par exemple au moins un moteur électrique ou un module de commande dudit moteur, de sorte à pouvoir en assurer le traitement thermique, notamment le refroidissement.

Ainsi, au sein du système de traitement thermique 1, le radiateur primaire 22 de la boucle 2 de fluide caloporteur et le premier échangeur thermique 33 du circuit 3 de fluide réfrigérant sont exposés au flux d'air extérieur FA1, le radiateur primaire 22 étant, selon l'invention, disposé en amont du premier échangeur thermique 33 selon le sens de circulation S3 du flux d'air extérieur FA1. Avantageusement, le radiateur primaire 22 et le premier échangeur thermique 33 sont aménagés en face avant du véhicule. Alternativement, ils pourraient aussi être installés sur un pavillon du véhicule, dans une aile arrière et d'une manière générale en toutes zones du véhicule qui peut être balayées par le flux d'air extérieur FA1.

Le circuit 3 de fluide réfrigérant comprend ainsi la branche principale 300 sur laquelle sont successivement disposés, selon le sens de circulation S2 du fluide réfrigérant, le dispositif de compression 31, le premier échangeur thermique 33, le deuxième échangeur thermique 34, le troisième échangeur thermique 35, le premier organe de détente 32, et le quatrième échangeur thermique 36. Le fluide réfrigérant circulant dans une première portion 301 du circuit 3 de fluide réfrigérant, comprise entre la sortie du dispositif de compression 31 et l'entrée du premier organe de détente 32, est soumis à une haute pression tandis que le fluide réfrigérant circulant dans une deuxième portion 302 du circuit, comprise entre une sortie du premier organe de détente 32 et une entrée du dispositif de compression 31, est soumis une basse pression, inférieure à la haute pression.

Avantageusement, le circuit 3 de fluide réfrigérant peut comprendre, entre une sortie du premier échangeur thermique 33 et une entrée du deuxième échangeur thermique 34, au moins une bouteille 4. Une telle bouteille 4 assure que seule une fraction liquide du fluide réfrigérant sortant du premier échangeur thermique 33 soit amenée vers le deuxième échangeur thermique 34 de sorte que, lorsque le premier échangeur thermique 33 est utilisé comme condenseur, le deuxième échangeur thermique 34 et/ou le troisième échangeur thermique 35 peuvent être utilisés comme sous-refroidisseur du fluide réfrigérant.

Avantageusement, le circuit 3 de fluide réfrigérant du système de traitement thermique 1 comprend un échangeur thermique interne 37. Cet échangeur thermique interne 37 permet la récupération des calories d'une portion du circuit 3 de fluide réfrigérant, ici la première portion 301, pour les échanger avec une autre portion de ce même circuit, ici la deuxième portion 302, de manière à réduire la puissance consommée par le dispositif de compression 31 et globalement augmenter la performance du circuit 3 de fluide réfrigérant.

On distingue une première conduite 3010 de la première portion 301, dans laquelle le fluide réfrigérant est soumis à une haute pression et une haute température, et une deuxième conduite 3020, comprise dans la deuxième portion 302, dans laquelle le fluide réfrigérant est soumis à une basse pression, inférieure à la haute pression, et à une basse température. Dans l'exemple illustré, la première conduite 3010 et la deuxième conduite 3020 comprennent respectivement une première partie 371 et une deuxième partie 372 de l'échangeur thermique interne 37.

L'échangeur thermique interne 37 étant disposé entre deux conduites 3010, 3020 présentant un différentiel de température entre elles, on comprend qu'il autorise ainsi un échange de chaleur entre ses deux parties 371, 372 et donc entre les deux conduites 3010, 3020 du circuit 3 de fluide réfrigérant sur lesquelles sont agencées ces parties 371, 372. Dans l'exemple illustré, la première partie 371 de l'échangeur thermique interne 37 est disposée entre une sortie du troisième échangeur thermique 35 et l'entrée du premier organe de détente 32 et la deuxième partie 372 de cet échangeur thermique interne 37 est disposée entre une sortie du quatrième échangeur thermique 36 et l'entrée du dispositif de compression 31, permettant d'une part le réchauffement du fluide réfrigérant en amont du dispositif de compression 31 de sorte à ce que ce fluide réfrigérant soit exclusivement sous forme gazeuse lorsqu'il rejoint l'entrée du dispositif de compression 31 et d'autre part de refroidir le fluide réfrigérant en amont du premier organe de détente 32 de sorte à ce que la baisse de pression opérée par cet organe de détente 32 soit facilitée. L'efficacité globale du circuit 3 de fluide réfrigérant est ainsi améliorée en présence de cet échangeur thermique interne 37.

Le circuit 3 de fluide réfrigérant comprend une deuxième branche 310 qui diverge de la branche principale 300 et s'étend entre un point de divergence, dit premier point de divergence 311, disposé entre la sortie du troisième échangeur thermique 35 et une entrée du quatrième échangeur thermique 36, et un point de convergence, dit premier point de convergence 312, disposé entre la sortie du quatrième échangeur thermique 36 et l'entrée du dispositif de compression 31.

La deuxième branche 310 comprend successivement, selon le sens de circulation S2 du fluide réfrigérant, un organe de détente, dit deuxième organe de détente 313 et un cinquième échangeur thermique 314 thermiquement couplé au dispositif de stockage électrique 11 du véhicule configuré pour au moins alimenter électriquement l'élément 12 de la chaîne de traction électrique dudit véhicule. Le cinquième échangeur thermique 314 est ainsi agencé en parallèle du quatrième échangeur thermique 36 du point de vue du fluide réfrigérant.

On comprend que le dispositif de stockage électrique 11 est agencé à proximité, ou avantageusement en contact thermique, du cinquième échangeur thermique 314 et que ce dernier est configuré pour mettre en œuvre un échange de chaleur entre le fluide réfrigérant circulant dans la deuxième branche 310 et une deuxième boucle 5 de fluide caloporteur comprenant le dispositif de stockage électrique 11 et configurée pour en assurer le refroidissement. A titre d'exemple, le fluide caloporteur présent dans cette deuxième boucle peut être est mis en circulation par un circulateur 51.

La figure 1 montre également l'installation 10 de ventilation, chauffage et/ou climatisation qui comprend un boîtier 101 délimitant un volume interne. Le flux d'air intérieur FA2 est canalisé par ce boîtier 101 avant d'être envoyé dans l'habitacle du véhicule. Le boîtier 101 loge notamment le quatrième échangeur thermique 36 et pourra, à titre d'exemple, héberger au moins un échangeur configuré pour traiter thermiquement un flux d'air intérieur envoyé vers l'habitacle. L'installation 10 de ventilation, chauffage et/ou climatisation comprend également un ventilateur 102 chargé de mettre en mouvement le flux d'air intérieur FA2 dans le boîtier 101, ainsi que des volets 103 de mixage ou de distribution globalement désignés par la référence.

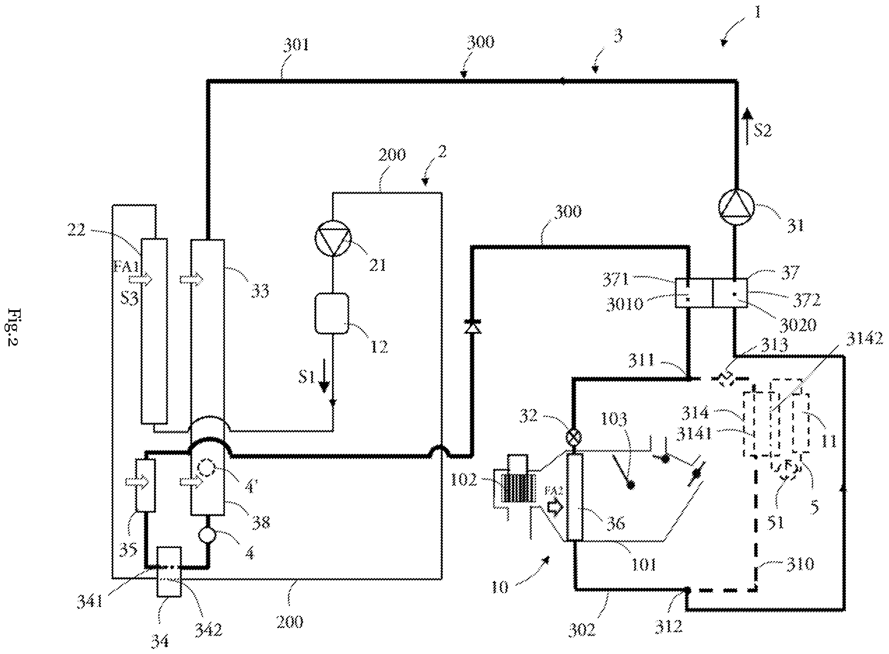

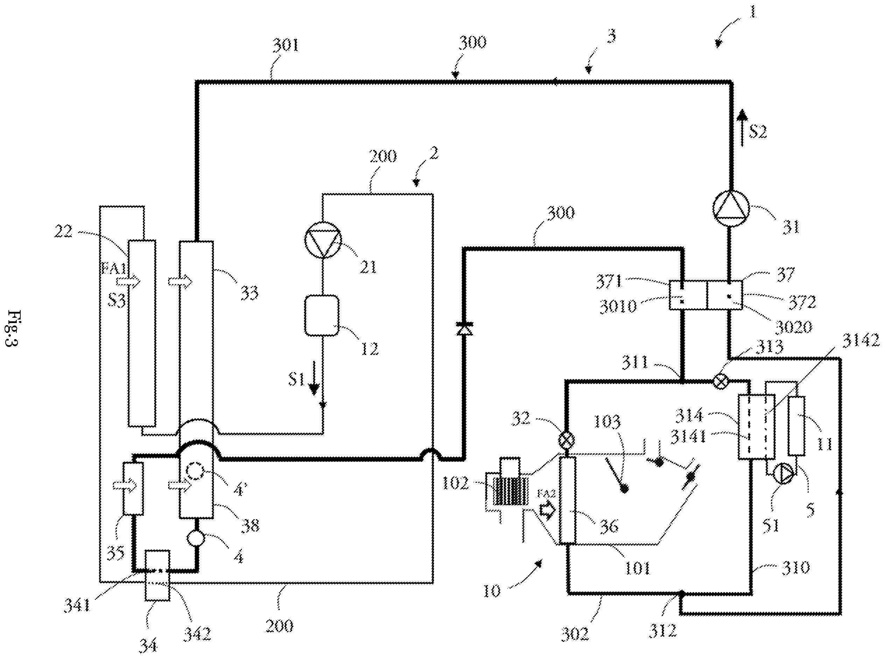

Les figures 2 et 3 décrivent des exemples de modes de fonctionnement distinct du système de traitement thermique 1 tel que précédemment exposé, c'est-à-dire réalisé selon le premier mode de réalisation. Sur ces figures, les traits pleins représentent des conduites du système de traitement thermique 1 dans lesquelles le fluide réfrigérant ou le fluide caloporteur circulent, tandis que les traits pointillés représentent des conduites du système de traitement thermique 1 dans lesquelles ni le fluide réfrigérant ni le fluide caloporteur ne circulent. Le flux d'air extérieur FA1 et son sens de circulation S3, le flux d'air intérieur FA2, le sens de circulation S1 du fluide caloporteur dans la boucle 2 de fluide caloporteur et le sens de circulation S2 du fluide réfrigérant dans le circuit 3 de fluide réfrigérant sont également schématiquement représentés sur les différentes figures 1 à 11 Des organes ou dispositifs de régulation du débit des différents fluides sont quant à eux illustrés pleins quand ils bloquent la circulation du fluide concerné, et évidés quand ils autorisent ladite circulation.

La figure 2 représente un premier exemple de fonctionnement du système de traitement thermique 1 selon le premier mode de réalisation, dans lequel le circuit 3 de fluide réfrigérant est configuré pour fonctionner en mode climatisation, c'est-à-dire qu'il est configuré pour refroidir le flux d'air intérieur FA2 avant que celui-ci ne soit envoyé dans l'habitacle du véhicule.

Dans le circuit 3 de fluide réfrigérant, la circulation du fluide réfrigérant se limite à la branche principale 300. La deuxième branche 310 n'est pas parcourues par le fluide réfrigérant. A titre d'exemple, la circulation du fluide réfrigérant peut être entravée dans lesdites branches par au moins le deuxième organe de détente 313 et/ou par un organe de régulation du débit de fluide réfrigérant tel qu'une vanne deux voies ou une vanne trois voies.

Le fluide réfrigérant quitte le dispositif de compression 31 sous haute pression, à haute température et à l'état gazeux en direction du premier échangeur thermique 33 qui fonctionne comme un condenseur. Le fluide réfrigérant présentant une température supérieure à celle du flux d'air extérieur FA1 traversant le premier échangeur thermique 33, il cède ses calories au flux d'air extérieur FA1. Le fluide réfrigérant ainsi refroidi quitte le premier échangeur thermique 33 majoritairement à l'état liquide et entre dans la bouteille 4 qui est configurée pour n'envoyer qu'une portion liquide du fluide réfrigérant vers le deuxième échangeur thermique 34. De par la présence de la bouteille 4, le deuxième échangeur thermique 34 fonctionne comme un sous-refroidisseur, c'est-à-dire qu'il assure le refroidissement du fluide réfrigérant circulant dans une première passe 341 du deuxième échangeur thermique 34 à une température au moins inférieure à sa température de condensation par échange thermique avec le fluide caloporteur, plus froid, circulant dans une deuxième passe 342 du deuxième échangeur thermique 34.

Notamment, il faut noter que le fluide caloporteur circulant dans la deuxième passe 342 du deuxième échangeur thermique 34 est ici issu du radiateur primaire 22 qui est traversé en premier par le flux d'air extérieur FA1, si bien que la température du fluide caloporteur est abaissée à une température proche de celle du flux d'air extérieur FA1, assurant ainsi un premier sous-refroidissement performant du fluide réfrigérant circulant dans le deuxième échangeur thermique 34 avant de l'envoyer vers le troisième échangeur thermique 35 en vue d'un second sous-refroidissement.

Dans le troisième échangeur thermique 35, le fluide réfrigérant refroidi, plus chaud que le flux d'air extérieur, cède ainsi des calories à ce dernier et ressort du troisième échangeur thermique 35 à une température inférieure à celle observée à la sortie du deuxième échangeur thermique 34.

Dans le présent mode de réalisation, le troisième échangeur thermique 35 est avantageusement disposé en amont du premier échangeur thermique 33 selon le sens de circulation S3 du flux d'air extérieur. De la sorte, le flux d'air extérieur FA1 impliqué dans l'échange thermique au niveau du troisième échangeur thermique 35 présente une température inférieure à celle du flux d'air extérieur FA1 impliqué dans l'échange thermique au niveau du premier échangeur thermique 33, qui a au préalable été réchauffé. Le pincement de température entre le fluide réfrigérant et le flux d'air extérieur FA1 propre au premier échangeur thermique 33 est ainsi réduit par rapport au pincement de température observé au niveau du troisième échangeur thermique 35. Un tel aménagement contribue à augmenter la capacité du système de traitement thermique 1, notamment en permettant, pour la fourniture d'une même puissance froide, une réduction de la vitesse de rotation du dispositif de compression 31 qui s'accompagne d'une diminution de la consommation électrique dudit dispositif 31 ainsi que d'une réduction de bruits éventuels dans l'habitacle pouvant résulter d'une vitesse de rotation élevée du compresseur.

Le fluide réfrigérant sous-refroidi est ensuite envoyé dans la première partie 371 de l'échangeur thermique interne 37 où, tel que précédemment exposé, il cède des calories au fluide réfrigérant plus froid circulant dans la deuxième partie 372 de l'échangeur thermique interne 37. Le fluide réfrigérant refroidi circule ensuite dans le premier organe de détente 32 dans lequel il subit une diminution de sa pression.

Le fluide réfrigérant, à basse pression, rejoint le quatrième échangeur thermique 36, utilisé comme évaporateur, dans lequel il est évaporé en captant des calories du flux d'air intérieur FA2. Le flux d'air intérieur FA2 ainsi refroidi est alors envoyé vers l'habitacle du véhicule tandis que le fluide réfrigérant quitte le quatrième échangeur thermique 36 réchauffé et au moins partiellement à l'état gazeux. Le fluide réfrigérant rejoint ensuite la deuxième partie 372 de l'échangeur thermique interne 37 au niveau duquel il capte les calories du fluide réfrigérant circulant dans la première partie 371 de l'échangeur thermique interne 37, puis est renvoyé vers le dispositif de compression 31.

Alternativement, le circuit 3 de fluide réfrigérant peut comprendre, entre la sortie du quatrième échangeur thermique 36 et une entrée de la deuxième partie 372 de l'échangeur thermique interne 37, un dispositif d'accumulation, non représenté, dans lequel la phase liquide et la phase gazeuse sont séparées de sorte que seule la phase gazeuse soit ensuite envoyée vers la deuxième partie 372 de l'échangeur thermique interne 37 puis, à nouveau, vers le dispositif de compression 31.

Dans la boucle 2 de fluide caloporteur, le fluide caloporteur est mis en circulation par l'élément de mise en circulation 21, il capte des calories d'au moins l'un des éléments 12 de la chaîne de traction du véhicule électrique puis décharge ces calories dans le flux d'air extérieur au niveau du radiateur primaire 22. Le fluide caloporteur refroidi entre ensuite dans le deuxième échangeur thermique 34 dans lequel, tel qu'exposé ci-dessus, il capte les calories du fluide réfrigérant circulant dans la première passe 341 du deuxième échangeur thermique 34.

Le fluide caloporteur sortant du deuxième échangeur thermique 34 est ensuite renvoyé vers l'élément de mise en circulation 21, le deuxième échangeur thermique 34 et le radiateur primaire 22 étant ainsi disposés dans la boucle 2 de fluide caloporteur de manière à ce que, d'un cycle à un autre, le radiateur primaire 22 décharge dans le flux d'air extérieur FA1 des calories captées par le deuxième échangeur thermique 34 mais également par l'élément 12 de la chaîne de traction électrique.

La figure 3 illustre un deuxième exemple de fonctionnement du système de traitement thermique 1. Ce deuxième exemple de fonctionnement est sensiblement similaire à celui décrit précédemment en ce le circuit 3 de fluide réfrigérant fonctionne selon un mode climatisation et la description faite de ces éléments en référence à la figure 2 est donc transposable au présent exemple de fonctionnement. Ce deuxième exemple de fonctionnement diffère du premier exemple de fonctionnement en ce que le système de traitement thermique 1 est configuré pour assurer le traitement thermique du dispositif de stockage électrique 11 simultanément au traitement thermique de l'habitacle. A cette fin, la deuxième branche 310 du circuit 3 de fluide réfrigérant est également parcourue par le fluide réfrigérant. Autrement dit le deuxième organe de détente 313 secondaire autorise la circulation du fluide réfrigérant dans ladite deuxième branche 310.

Ainsi, lorsque le fluide réfrigérant arrive au niveau du premier point de divergence 311, une partie du fluide réfrigérant est dirigée vers le premier organe de détente 32 et vers le quatrième échangeur thermique 36, tel que décrit en référence à la figure 2, et une autre partie de ce fluide réfrigérant est dirigée vers le deuxième organe de détente 313 de la deuxième branche 310, dans lequel sa pression est abaissée, avant de rejoindre le cinquième échangeur thermique 314. Dans le cinquième échangeur thermique 314, le fluide réfrigérant, circulant dans une première passe 3141 du cinquième échangeur thermique 314, capte des calories du fluide caloporteur circulant dans une deuxième passe 3142 du cinquième échangeur thermique 314, plus chaud que le fluide réfrigérant.

Le fluide réfrigérant quitte le cinquième échangeur thermique 314 et rejoint le premier point de convergence 312 afin d'être dirigé vers le dispositif de compression 31. Dans un même temps, le fluide caloporteur qui a été refroidi dans le cinquième échangeur thermique 314 circule dans la deuxième boucle 5 de fluide caloporteur de sorte à refroidir le dispositif de stockage électrique 11.

Un tel mode de fonctionnement peut notamment être mis en œuvre lors d'une phase de charge rapide du dispositif de stockage électrique 11 de sorte à réduire son échauffement, le système de traitement thermique 1 assurant ainsi simultanément le traitement thermique dudit dispositif de stockage électrique 11 et le maintien d'un niveau de confort thermique acceptable à l'intérieur de l'habitacle.

Selon un deuxième mode de réalisation, sensiblement identique au premier mode de réalisation tel qu'exposé en référence aux figures 1 à 3, le système de traitement thermique 1 peut être configuré de sorte que la bouteille soit intégrée dans le premier échangeur thermique 33 et non disposée entre la sortie du premier échangeur thermique 33 et l'entrée du deuxième échangeur thermique 34. Cette alternative est représentée sur les figures 1 à 3 par la bouteille 4', illustrée en pointillés dans le premier échangeur thermique 33.

De par cet arrangement, une section terminale 38 du premier échangeur thermique 33, comprenant la sortie du premier échangeur thermique 33, est uniquement alimentée en fluide réfrigérant à l'état liquide par la bouteille 4'. Il résulte d'une telle architecture que, lorsque le circuit 3 de fluide réfrigérant du système de traitement thermique 1 fonctionne selon un mode climatisation, sensiblement identique à celui précédemment exposé en référence à la figure 2, ou selon un mode climatisation et traitement thermique d'un dispositif de stockage électrique 11, tel qu'exposé plus haut en référence à la figure 3, le premier échangeur thermique 33 fonctionne partiellement en tant que sous-refroidisseur. Notamment, une première section du premier échangeur thermique 33 fonctionne, tel que précédemment exposé, en tant que condenseur, tandis que la section terminale 38 fonctionne en tant que sous-refroidisseur.

Le fluide réfrigérant circulant dans le système de traitement thermique 1 est ainsi soumis à trois sous-refroidissement successifs, respectivement dans le premier échangeur thermique 33, dans le deuxième échangeur thermique 34 et dans le troisième échangeur thermique 35, et les besoins thermiques du système de traitement thermique 1 peuvent être réduits.

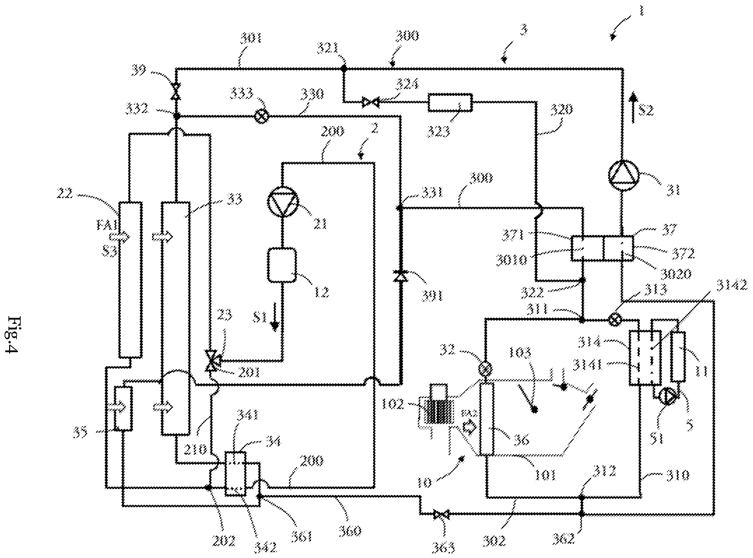

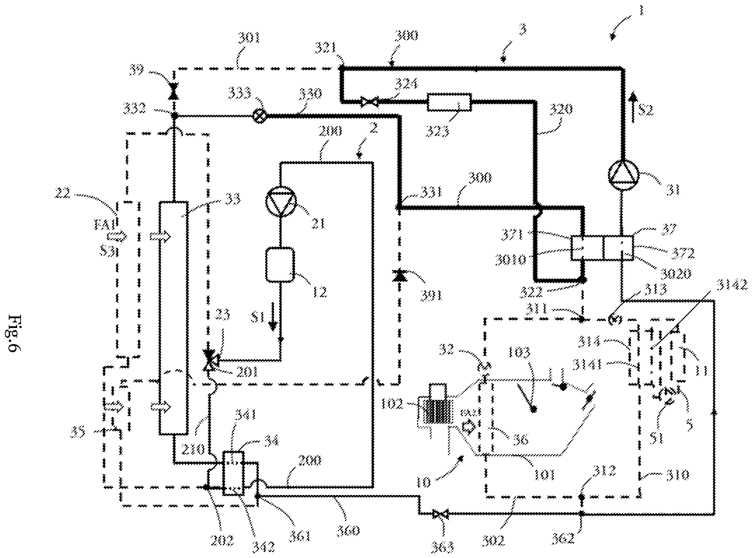

Les figures 4 à 6 illustrent un troisième mode de réalisation du système de traitement thermique 1. Dans le système de traitement thermique 1 tel qu'illustré à la figure 6, les branche principale 300 et deuxième branche 310 du circuit 3 de fluide réfrigérant ainsi que les différents composants qu'elles comprennent sont identiques à ce qui a été détaillé en référence aux figures 1 à 3 à la différence que le circuit 3 de fluide réfrigérant est dépourvu de bouteille 4.

Similairement à ce qui a été précédemment exposé, le circuit 3 de fluide réfrigérant peut comprendre, entre la sortie du quatrième échangeur thermique 36 et l'entrée de la deuxième partie 372 de l'échangeur thermique interne 37, un dispositif d'accumulation, non représenté, dans lequel la phase liquide et la phase gazeuse sont séparées de sorte que seule la phase gazeuse soit ensuite envoyée vers la deuxième partie 372 de l'échangeur thermique interne 37 puis, à nouveau, vers le dispositif de compression 31.

Le circuit 3 de fluide réfrigérant comprend une troisième branche 320 qui s'étend entre un point de divergence, appelé ci-après deuxième point de divergence 321, disposé entre la sortie du dispositif de compression 31 et une entrée du premier échangeur thermique 33, et un point de convergence, appelé ci-après deuxième point de convergence 322, disposé entre la sortie du troisième échangeur thermique 35 et l'entrée du quatrième échangeur thermique 36. La troisième branche 320 comprend au moins un échangeur de chaleur 323 configuré pour être au moins utilisé comme condenseur. A titre d'exemple, l'échangeur de chaleur 323 peut mettre en œuvre un échange thermique entre le fluide réfrigérant et du fluide caloporteur ou entre le fluide réfrigérant et un flux d'air destiné à être envoyé vers l'habitacle.

La troisième branche 320 permet notamment le contournement du quatrième échangeur thermique 36, un tel contournement pouvant notamment être mis en œuvre lorsque le circuit fonctionne dans un mode chauffage afin d'envoyer un flux d'air chaud dans l'habitacle du véhicule. A cette fin, la troisième branche 320 peut comprendre un organe de régulation 324 du débit de fluide réfrigérant, par exemple une vanne deux voies, configuré pour diriger le fluide réfrigérant vers la branche principale 300 ou vers la troisième branche 320.

Le circuit 3 de fluide réfrigérant comprend également une quatrième branche 330 qui s'étend entre un point de divergence, appelé ci-après troisième point de divergence 331, disposé entre la sortie du troisième échangeur thermique 35 et l'entrée du quatrième échangeur thermique 36, et un point de convergence, appelé ci-après troisième point de convergence 332, disposé entre la sortie du dispositif de compression 31 et l'entrée du premier échangeur thermique 33. La quatrième branche 330 comprend au moins un organe de détente dit troisième organe de détente 333.

Enfin, le circuit 3 de fluide réfrigérant comprend une cinquième branche 360 qui s'étend entre un point de divergence, appelé ci-après quatrième point de divergence 361, disposé entre une sortie du deuxième échangeur thermique 34 et une entrée du troisième échangeur thermique 35, et un point convergence, appelé ci-après quatrième point de convergence 362, disposé entre la sortie du quatrième échangeur thermique 36 et l'entrée du dispositif de compression 31. La cinquième branche 360 contribue également au contournement du quatrième échangeur thermique 36, notamment lorsque le circuit 3 de fluide réfrigérant fonctionne en mode chauffage, tel qu'exposé ci-après. Particulièrement, la cinquième branche 360 peut comprendre au moins un dispositif de régulation 363 du débit de fluide réfrigérant, par exemple une vanne deux voies, configuré pour diriger le fluide réfrigérant vers la branche principale 300 ou vers la cinquième branche 360.

La boucle 2 de fluide caloporteur du présent système de traitement thermique 1 diffère du premier et du deuxième mode de réalisation en ce qu'elle comprend, en plus de la ligne principale 200, une deuxième ligne 210 en dérivation de ladite ligne principale 200. La deuxième ligne 210 s'étend entre un point de dérivation 201, disposé entre une sortie de l'élément de mise en circulation 21 et une entrée du radiateur primaire 22, et un point de raccordement 202, disposé entre une sortie du radiateur primaire 22 et l'entrée du deuxième échangeur thermique 34. La deuxième ligne 210 comprend au moins un organe de contrôle 23 du débit de fluide caloporteur configuré pour diriger sélectivement le fluide caloporteur vers la ligne principale 200 et/ou vers la deuxième ligne 210. Dans l'exemple illustré, l'organe de contrôle 23 est une vanne trois voies disposée au niveau du point de dérivation 201. Alternativement, la boucle 2 de fluide caloporteur pourra comprendre deux organes de contrôle 23 du débit de fluide caloporteur, par exemple deux vannes deux voies, disposés dans la ligne principale 200 et dans la deuxième ligne 210.

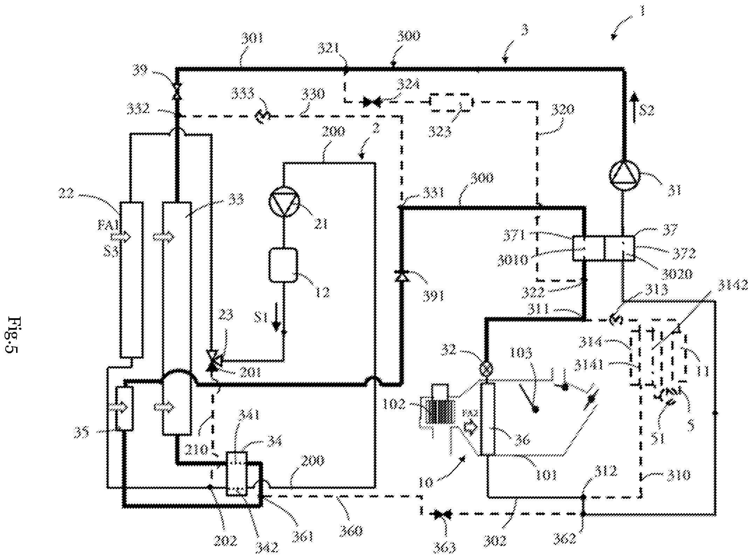

La figure 5 représente le troisième mode de réalisation lorsqu'il fonctionne selon le premier mode de fonctionnement du système de traitement thermique 1, c'est à dire lorsque le circuit 3 de fluide réfrigérant est configuré pour fonctionner en mode climatisation. Dans un tel mode de fonctionnement, la circulation du fluide réfrigérant dans le circuit 3 de fluide réfrigérant est identique à celle des premier et deuxième modes de fonctionnement, la description faite en référence à la figure 2 est ainsi transposable au présent mode de réalisation et la circulation du fluide réfrigérant se limite à la branche principale 300. La deuxième branche 310, la troisième branche 320, la quatrième branche et la cinquième branche ne sont pas parcourues par le fluide réfrigérant, la circulation du fluide réfrigérant dans lesdites branches pouvant être entravée par au moins l'un des organes de détente 313, 333 et/ou l'un des organes ou dispositifs de régulation 324, 353 du débit du circuit 3 de fluide réfrigérant compris dans les branches correspondantes.

A titre d'exemple, lorsque le fluide réfrigérant arrive au niveau du deuxième point de divergence 321, la combinaison de la fermeture du troisième organe de régulation 324 de la troisième branche 320 et de l'ouverture d'un organe de régulation 39 de la branche principale 300 empêche la circulation du fluide réfrigérant dans troisième branche 320. Il en résulte que le fluide réfrigérant circule dans la branche principale 300 en direction du premier échangeur thermique 33 qui fonctionne comme un condenseur. Similairement, lorsque le fluide réfrigérant liquide sortant du deuxième échangeur thermique 34 passe le quatrième point de divergence 361, la fermeture du dispositif de régulation du débit 353 de la cinquième branche 360 assure l'envoi du fluide réfrigérant vers le troisième échangeur thermique 35. Il en va de même avec le fluide réfrigérant sortant du troisième échangeur thermique 35 qui, lorsqu'il passe le troisième point de divergence 331, demeure sur la branche principale de par la fermeture du troisième organe de détente 333.

Dans la boucle 2 de fluide caloporteur, l'organe de contrôle 23 entrave la circulation du fluide caloporteur dans la deuxième ligne 210 de sorte que le fluide caloporteur circule dans la ligne principale 200 selon un cheminement identique à celui précédemment exposé en référence à la figure 2.

Il est entendu que le présent mode de réalisation peut également mettre en œuvre le deuxième mode de fonctionnement assurant le traitement thermique simultané de l'habitacle et du dispositif de stockage électrique 11, la description faite précédemment en référence à la figure 3 étant transposable à la présente alternative.

La figure 6 illustre un troisième mode de fonctionnement du système de traitement thermique 1 selon le troisième mode de réalisation tel qu'illustré à la figure 4, dans lequel le circuit 3 de fluide réfrigérant fonctionne en mode chauffage de l'habitacle.

Dans ce troisième exemple de fonctionnement, la deuxième branche 310 du circuit 3 de fluide réfrigérant, couplée thermiquement au dispositif de stockage électrique 11, n'est pas parcourue par le fluide réfrigérant.

Le fluide réfrigérant quitte le dispositif de compression 31 à l'état gazeux, à haute pression et à haute température, et se dirige vers le deuxième point de divergence 321. L'organe de régulation 39 de la branche principale 300 est fermé tandis que le l'organe de régulation 324, compris dans la troisième branche 320, est ouvert. Le fluide réfrigérant comprimé est ainsi dévié de la branche principale 300 et envoyé vers la troisième branche 320 de manière à contourner le premier échangeur thermique 33.

Le fluide réfrigérant est ensuite renvoyé sur la branche principale 300 au niveau du deuxième point de convergence 322 puis il traverse la première partie 371 de l'échangeur thermique interne 37, dont le fonctionnement est identique à celui précédemment exposé. Le fluide réfrigérant quitte l'échangeur thermique interne 37 dans un état au moins partiellement liquide et circule sur la branche principale 300 jusqu'au troisième point de divergence 331 au niveau duquel, de par l'ouverture du troisième organe de détente 333, il est envoyé sur la quatrième branche 330.

Avantageusement, la branche principale 300 peut également comprendre au moins un clapet anti-retour 391, disposé entre la sortie du troisième échangeur thermique 35 et le troisième point de divergence 331 et configurée pour entraver la circulation du fluide réfrigérant dans la branche principale 300 lorsque celui-ci est envoyé en direction de la quatrième branche 330.

Le fluide réfrigérant traverse le troisième organe de détente 333, dans lequel il subit une détente, et ressort à l'état diphasique. Ce fluide réfrigérant détendu passe ensuite par le troisième point de convergence 332 puis entre dans le premier échangeur thermique 33 qui est utilisé comme évaporateur et configuré pour mettre en œuvre un échange thermique entre le fluide réfrigérant et le flux d'air extérieur FA1 à l'habitacle.

A titre d'exemple, le fluide réfrigérant entrant dans le premier échangeur thermique 33 peut présenter une température de l'ordre de -30°C tandis que le flux d'air extérieur FA1 présente une température supérieure, par exemple de l'ordre de -20 à - 5°C. Également, le radiateur primaire 22 étant arrêté lorsque le circuit 3 de fluide réfrigérant fonctionne en mode chauffage, le flux d'air extérieur FA1 impliqué dans l'échange thermique dans le premier échangeur thermique 33 n'est pas préalablement réchauffé en passant au travers du radiateur primaire 22. Le flux d'air extérieur FA1 cède ainsi ses calories au fluide réfrigérant, plus froid, circulant dans le premier échangeur thermique 33 de sorte à l'évaporer.

Il est par ailleurs à noter que, lorsque le flux d'air extérieur FA1 présente de telles températures, il peut directement assurer le refroidissement du dispositif de stockage électrique 11 et/ou de l'au moins un élément 12 de la chaîne de traction électrique.

Le fluide réfrigérant sort du premier échangeur thermique 33 à l'état au moins partiellement gazeux et est envoyé dans le deuxième échangeur thermique où il subit une deuxième évaporation. En effet, selon le troisième mode de fonctionnement, le deuxième échangeur thermique peut être configuré pour fonctionner comme un deuxième évaporateur. Ainsi le fluide caloporteur circulant dans la deuxième passe 342 du deuxième échangeur thermique 34 cède des calories au fluide réfrigérant circulant dans la première passe 341 du deuxième échangeur thermique. Celui-ci ressort ainsi réchauffé et à l'état essentiellement gazeux puis circule jusqu'au quatrième point de divergence 361 du circuit 3 de fluide réfrigérant. Le dispositif de régulation 363 du débit de fluide réfrigérant de la cinquième branche 360 étant ouvert, le fluide réfrigérant contourne le troisième échangeur thermique 35 et est envoyé vers la cinquième branche 360, en direction du quatrième point de convergence 362 et de la deuxième partie 372 de l'échangeur thermique interne 37.

Dans la boucle de fluide caloporteur, le radiateur primaire 22 est inactif. Le fluide caloporteur est mis en circulation dans la boucle 2 jusqu'à l'organe de contrôle 23 aménagé sur le point de dérivation 201. Celui-ci est ouvert sélectivement de sorte à entraver la circulation du fluide caloporteur vers le radiateur primaire 22 et à permettre sa circulation sur la deuxième ligne 210. Au niveau du point de raccordement 202, le fluide caloporteur est renvoyé sur la ligne principale 200 en direction du deuxième échangeur thermique 34 qui est, tel qu'exposé précédemment, utilisé comme évaporateur par rapport au fluide réfrigérant circulant dans le circuit 3. Le fluide caloporteur circulant dans la deuxième passe 342 du deuxième échangeur thermique 34, plus froid que le fluide réfrigérant, cède des calories à ce dernier. Le fluide caloporteur ainsi refroidi est renvoyé vers l'élément de mise en circulation 21 puis vers l'au moins un élément 12 de la chaîne de traction dont il peut ainsi avantageusement assurer le refroidissement.

Avantageusement, les premier et deuxième mode de réalisation tels qu'exposés en référence aux figures 1 à 4 pourront également comprendre la troisième branche et/ou la quatrième branche et/ou la cinquième branche telle(s) que décrites en références aux figures 4 à 6, les caractéristiques et éléments relatifs à ces branches pouvant, selon des modes de réalisation alternatifs, être transposés au premier et deuxième mode de réalisation.

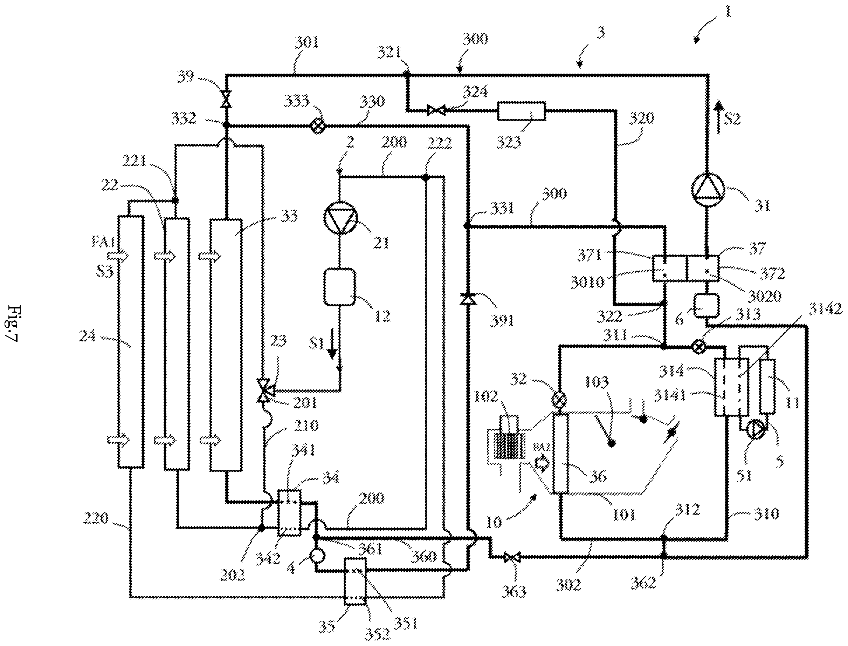

Les figures 7 à 11 illustrent deux modes de réalisation du système de traitement thermique 1 pour lesquels le troisième échangeur thermique 35 met en œuvre un échange thermique entre le fluide réfrigérant circulant dans le circuit 3 et le fluide caloporteur circulant dans la boucle 2. A la différence du troisième échangeur thermique 35 tel que précédemment exposé, c'est-à-dire mettant en œuvre un échange thermique entre le flux d'air extérieur FA1 et le fluide réfrigérant, le positionnement du troisième échangeur thermique 35 selon les présents modes de réalisation n'est pas imposé au niveau d'une zone de circulation d'un flux d'air extérieur FA1, par exemple en face avant. Aussi un tel troisième échangeur thermique 35 peut avantageusement être disposé à distance du premier échangeur thermique 33, facilitant ainsi son implantation au sein du véhicule et limitant l'encombrement généré par le système de traitement thermique 1 en face avant du véhicule. Par ailleurs, un tel troisième échangeur thermique 35 peut présenter des dimensions plus réduites que le troisième échangeur thermique 35 tel qu'exposé en référence aux trois premiers modes de réalisation tout en conservant des capacités de refroidissement similaires.

La figure 7 représente un quatrième mode de réalisation de la présente invention dont le circuit 3 de fluide réfrigérant est sensiblement identique à ce qui a été précédemment exposé pour le troisième mode de réalisation. La description relative audit circuit, faite en référence aux figures 4 à 6, est ainsi transposable au présent mode de réalisation.

Tel que précédemment exposé, le circuit 3 de fluide réfrigérant peut comprendre, entre la sortie du quatrième échangeur thermique 36 et l'entrée de la deuxième partie 372 de l'échangeur thermique interne 37, le dispositif d'accumulation 6.

La boucle 2 de fluide caloporteur, similairement à ce qui a pu être exposé pour le troisième mode de réalisation en références aux figures 4 à 6, comprend la ligne principale 200 sur laquelle sont disposés l'élément de mise en circulation 21 du fluide caloporteur, le radiateur primaire 22 et le deuxième échangeur thermique 34. La boucle 2 de fluide caloporteur comprend la deuxième ligne 210 qui s'étend en dérivation de la ligne principale 200 entre le point de dérivation 201 tel que précédemment décrit et le point de raccordement 202. Cette deuxième ligne 210 peut comprendre au moins l'organe de contrôle 23 du débit de fluide caloporteur.

Également, selon le présent mode de réalisation, la boucle 2 de fluide caloporteur comprend une ligne de dérivation 220 qui comporte au moins le troisième échangeur thermique 35 et un radiateur secondaire 24 configuré pour mettre en œuvre un échange thermique entre le fluide caloporteur et le flux d'air extérieur FA1 à l'habitacle. Le radiateur secondaire 24 est particulièrement disposé en amont du radiateur primaire 22 selon le sens de circulation S3 du flux d'air extérieur FA1 à l'habitacle de sorte que, en face avant du véhicule, on trouve successivement, selon le sens de circulation S3 du flux d'air extérieur, le radiateur secondaire 24 puis le radiateur primaire 22 puis le premier échangeur thermique 33.

La ligne de dérivation 220 s'étend entre un point de séparation 221, disposé entre une sortie de l'élément de mise en circulation 21 du fluide caloporteur et l'entrée du radiateur primaire 22, et un point de jonction 222, disposé entre la sortie du deuxième échangeur thermique 34 et une entrée de l'élément de mise en circulation 21. La ligne de dérivation 220 permet avantageusement la circulation simultanée, en parallèle, du fluide caloporteur dans le radiateur primaire 22 puis le deuxième échangeur thermique 34 d'une part et dans le radiateur secondaire 24 et le troisième échangeur thermique 35 d'autre part.

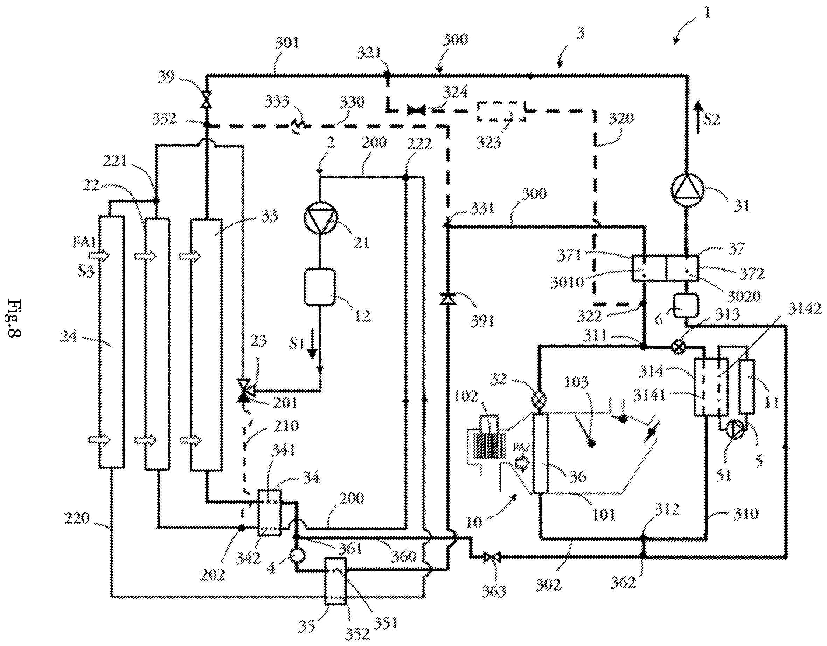

La figure 8 représente le système de traitement thermique 1 selon le quatrième mode de réalisation lorsque celui-ci fonctionne selon le premier mode de fonctionnement, c'est-à-dire lorsque le circuit 3 de fluide réfrigérant est configuré pour fonctionner en mode climatisation.

Dans le circuit 3 de fluide réfrigérant, la circulation du fluide réfrigérant est limitée à la branche principale 300 du circuit 3, le cheminement du fluide réfrigérant étant ainsi sensiblement identique à ce qui a été précédemment exposé pour les premiers modes de réalisation. La description qui en a été faite en référence à la figure 2 ou en référence à la figure 5 est ainsi transposable au présent mode de réalisation à la différence que, dans le présent mode de réalisation, le système de traitement thermique peut être dépourvu de bouteille ou, alternativement, la bouteille 4 peut être disposée entre la sortie du deuxième échangeur thermique 34 et l'entrée du troisième échangeur thermique 35, par exemple en aval du quatrième point de divergence 361 selon le sens de circulation du fluide réfrigérant dans le circuit 3. Il résulte d'une telle architecture que seul le troisième échangeur thermique 35 fonctionne comme un sous-refroidisseur en lieu d'au moins le deuxième échangeur thermique 34 et le troisième échangeur thermique 35 tel que précédemment exposé.

Il est entendu que le présent mode de réalisation pourra également mettre en œuvre le deuxième mode de fonctionnement, tel que précédemment décrit en référence à la figure 3, afin d'assurer simultanément le traitement thermique de l'habitacle et le traitement thermique du dispositif de stockage électrique 11, la description du cheminement du fluide réfrigérant dans la deuxième branche 310 faite en référence à la figure 3 étant transposable au présent mode de réalisation.

Dans la boucle 2 de fluide caloporteur, le fluide caloporteur est mis en circulation sur la ligne principale 200 jusqu'à l'organe de contrôle 23 aménagé sur le point de dérivation 201. Celui-ci est ouvert sélectivement de sorte à entraver la circulation du fluide caloporteur vers la deuxième ligne 210 et à envoyer le fluide caloporteur en direction du radiateur primaire 22. Au niveau du point de séparation 221, le fluide caloporteur est divisé en deux portions. Une première fraction 301 du fluide caloporteur est envoyée sur la ligne de dérivation 220, vers le radiateur secondaire 24, tandis qu'une deuxième fraction demeure sur la ligne principale 200 et circule en direction du radiateur primaire 22.

Sur la ligne principale 200, le fluide caloporteur entre dans le radiateur primaire 22 et décharge des calories dans le flux d'air extérieur. Avantageusement, le radiateur primaire 22 est disposé dans la boucle 2 de sorte à décharger dans le flux d'air extérieur FA1 des calories captées dans l'au moins un élément 12 de la chaîne de traction. Le fluide caloporteur circule ensuite dans la deuxième passe 342 du deuxième échangeur thermique 34 dans laquelle il capte des calories du fluide réfrigérant, plus chaud, circulant dans la première passe 341 du deuxième échangeur thermique 34. Le fluide caloporteur est ensuite renvoyé vers l'élément de mise en circulation 21.

Dans la ligne de dérivation 220, le fluide caloporteur circulant dans le radiateur secondaire 24, plus chaud que le flux d'air extérieur FA1, cède des calories à ce dernier. Le radiateur secondaire 24 est disposé dans la boucle de sorte à décharger dans le flux d'air extérieur FA1 des calories captées dans l'au moins un élément 12 de la chaîne de traction. Le radiateur secondaire 24 est avantageusement disposé de sorte à permettre un échange thermique entre le fluide caloporteur et l'intégralité du débit de flux d'air extérieur FA1, il présente donc une bonne efficacité d'échange thermique et la température du fluide caloporteur peut être abaissée à une température proche de la température du flux d'air extérieur FA1. Le fluide caloporteur ainsi refroidi est envoyé vers le troisième échangeur thermique 35, utilisé comme sous-refroidisseur, tandis que le flux d'air extérieur FA1 réchauffé circule au travers du radiateur primaire 22 tel que précédemment exposé. Le fluide caloporteur circulant dans une deuxième passe 352 du troisième échangeur thermique 35 capte les calories du fluide réfrigérant circulant dans une première passe 351 du troisième échangeur thermique 35, plus chaud, qui est issu du deuxième échangeur thermique 34 et abaisse la température de ce dernier à une température proche de celle du flux d'air extérieur FA1 arrivant en face avant du véhicule.

Le fluide caloporteur issu du radiateur secondaire 24 est ainsi avantageusement abaissé à une température proche de celle du flux d'air extérieur. Une telle architecture du système de traitement thermique 1 assure ainsi avantageusement la réduction du pincement de température du troisième échangeur 35 de sorte à améliorer la capacité thermique dudit système.

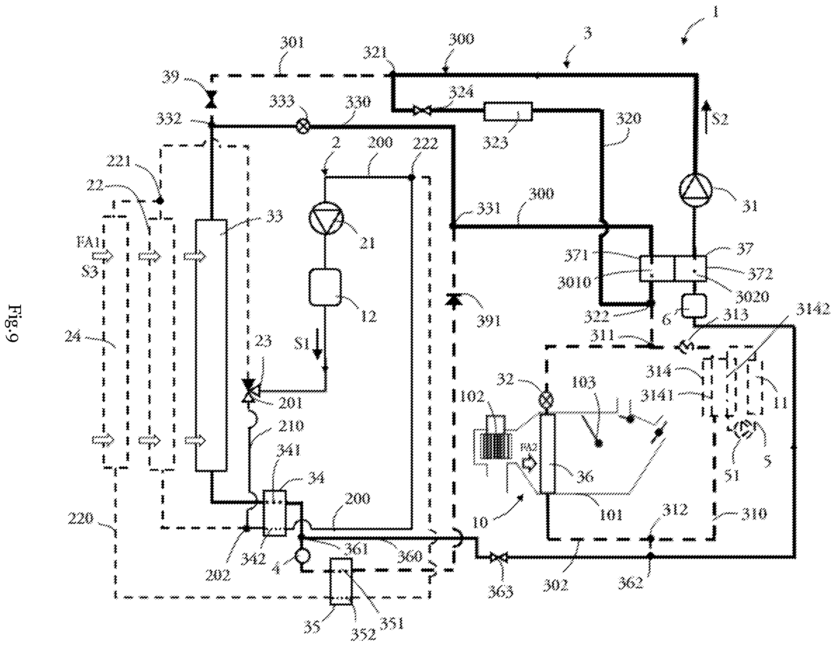

La figure 9 représente le système de traitement thermique 1 selon le quatrième mode de réalisation lorsque celui-ci met en œuvre le troisième mode de fonctionnement, c'est-à-dire lorsque le circuit 3 de fluide réfrigérant est configuré pour fonctionner en mode chauffage. Le cheminement du fluide réfrigérant dans le circuit est similaire à ce qui a été précédemment exposé pour le troisième mode de réalisation, la description faite en référence à la figure 6 étant ainsi transposable au présent mode de réalisation.

Dans la boucle 2 de fluide caloporteur, similairement à ce qui a été exposé en référence à la figure 6, l'organe de contrôle 23 entrave la circulation du fluide caloporteur vers le radiateur primaire 22. Dans le présent mode de réalisation, il en résulte que la circulation vers le radiateur secondaire 24 est également empêchée, le radiateur primaire 22 et le radiateur secondaire 24 étant ainsi inactifs.

Ainsi, au niveau du point de dérivation 201, le fluide caloporteur est envoyé vers la deuxième ligne 210 puis est renvoyé sur la ligne principale 200 en amont du deuxième échangeur thermique 34 selon le sens de circulation S1 du fluide caloporteur dans la boucle. Tel que précédemment exposé, le fluide caloporteur, plus chaud que le fluide réfrigérant circulant dans la première passe 341 du deuxième échangeur thermique 34, cède des calories à ce dernier de sorte à l'évaporer. Le fluide caloporteur sort ainsi refroidi du deuxième échangeur thermique 34 puis est renvoyé vers l'élément de mise en circulation 21 et l'au moins un élément 12 de la chaîne de traction afin de permettre son refroidissement.

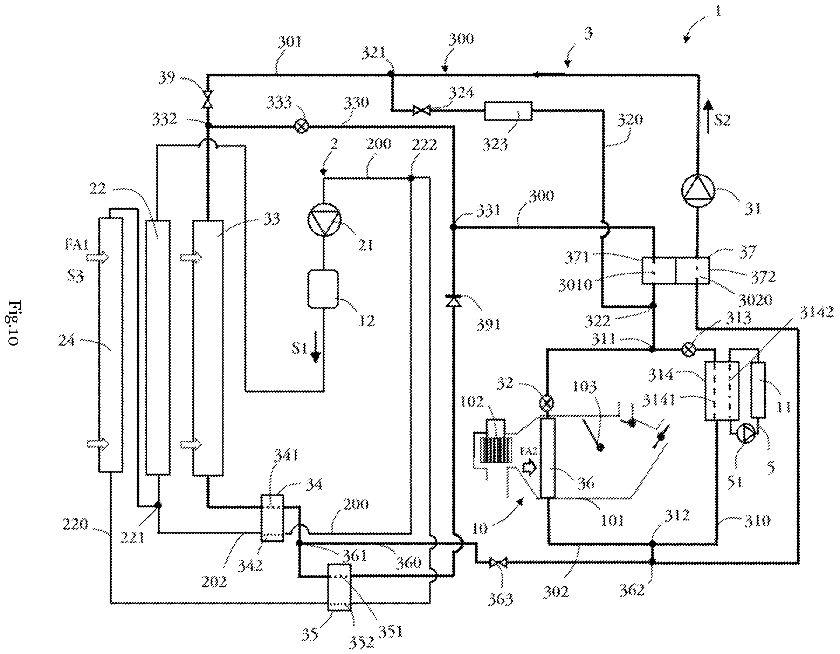

La figure 10 représente un cinquième mode de réalisation de la présente invention dans lequel le troisième échangeur thermique 35 met en œuvre un échange thermique entre le fluide réfrigérant circulant dans le circuit et le fluide caloporteur circulant dans la boucle. Dans le présent mode de réalisation, le circuit 3 de fluide réfrigérant est sensiblement identique à ce qui a été précédemment exposé en référence aux troisième et quatrièmes modes de réalisation. La description relative audit circuit, faite en référence à la figure aux figures 4 et 7, est ainsi transposable au présent mode de réalisation. Le présent mode de réalisation permet de diminuer davantage le pincement de température entre le fluide caloporteur en sortie du radiateur secondaire 24 et le flux d'air extérieur FA1 et donc d'améliorer les performances thermiques du système de traitement thermique 1

Similairement au quatrième mode de réalisation, le système de traitement thermique peut être dépourvu de bouteille, tel que présentement illustré, ou peut comprendre la bouteille 4, disposée entre la sortie du deuxième échangeur thermique 34 et l'entrée du troisième échangeur thermique 35. Il en va de même pour l'accumulateur tel que précédemment mentionné, disposé en amont de la deuxième partie 372 de l'échangeur thermique interne 37 selon le sens de circulation S2 du fluide réfrigérant dans le circuit 3.

Également, le cinquième mode de réalisation se distingue du troisième mode de réalisation par l'absence de la deuxième ligne 210 et par un agencement différent de la ligne de dérivation 220 dans la boucle 2 de fluide caloporteur. Dans le présent cinquième mode de réalisation, la ligne de dérivation 220 s'étend entre le point de séparation 221, cette fois disposé entre la sortie du radiateur primaire et l'entrée du deuxième échangeur thermique, et le point de jonction 222, disposé, tel que précédemment exposé, entre la sortie du deuxième échangeur thermique 34 et l'entrée de l'élément de mise en circulation 21. Similairement au quatrième mode de réalisation, la ligne de dérivation 220 comporte au moins le troisième échangeur thermique 35 et le radiateur secondaire 24 configuré pour mettre en œuvre un échange thermique entre le fluide caloporteur et le flux d'air extérieur, le radiateur secondaire 24 étant disposé en amont du radiateur primaire 22 selon le sens de circulation S3 du flux d'air extérieur à l'habitacle. Similairement à ce qui a été précédemment exposé en référence au quatrième mode de réalisation, le radiateur secondaire 24 est avantageusement disposé de sorte à permettre un échange thermique entre le fluide caloporteur et l'intégralité du débit de flux d'air extérieur FA1, il présente ainsi une bonne efficacité d'échange thermique et permet d'abaisser la température du fluide caloporteur à une température proche de la température du flux d'air extérieur FA1.

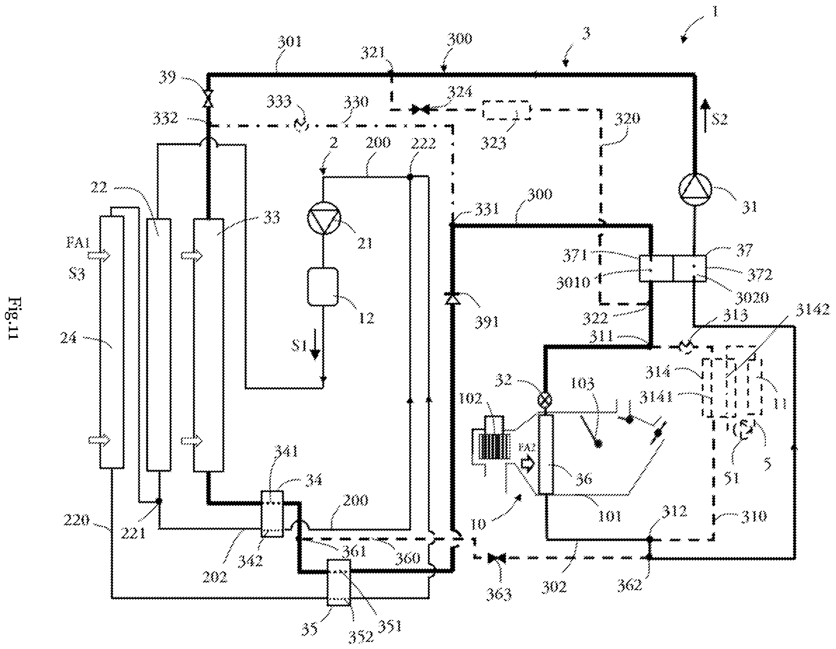

La figure 11 représente le système de traitement thermique 1 selon le cinquième mode de réalisation lorsque celui-ci met en œuvre le premier mode de fonctionnement, c'est à dire dans lequel le circuit 3 de fluide réfrigérant est configuré pour fonctionner en mode climatisation.

Dans le circuit 3 de fluide réfrigérant, la circulation du fluide réfrigérant est limitée à la branche principale 300, le cheminement du fluide réfrigérant étant sensiblement identique à ce qui a été précédemment exposé pour les troisième ou quatrième modes de réalisation de sorte que la description qui en a été faite en référence aux figures 5 et 8 est transposable au présent mode de exception faite de la présence ou encore du positionnement de la bouteille.

Il est entendu que le présent mode de réalisation pourra également mettre en œuvre le deuxième mode de fonctionnement tel que précédemment exposé de sorte à assurer simultanément le traitement thermique de l'habitacle et le traitement thermique du dispositif de stockage électrique 11, la description du cheminement du fluide réfrigérant faite en référence à la figure 3 peut ainsi également être appliquée au présent mode de réalisation.

Dans la boucle 2 de fluide caloporteur, le fluide caloporteur est mis en circulation sur la ligne principale 200 jusqu'au radiateur primaire 22 où il décharge des calories dans le flux d'air extérieur, plus froid. Le fluide caloporteur ainsi refroidi sort du radiateur primaire 22 et circule dans la ligne principale 200 jusqu'au point de séparation 221. Là une première fraction du fluide caloporteur est envoyée vers le deuxième échangeur thermique 34 tandis qu'une deuxième fraction du fluide caloporteur est envoyée sur la ligne de dérivation 220, vers le radiateur secondaire 24, en vue d'un second refroidissement.

Tel qu'exposé précédemment en référence à la figure 8, dans le deuxième échangeur thermique 34, le fluide caloporteur capte des calories du fluide réfrigérant, plus chaud, circulant dans la première passe 341 du deuxième échangeur thermique 34. Ce fluide caloporteur est ensuite renvoyé vers l'élément de mise en circulation 21, par exemple de sorte à permettre le refroidissement de l'au moins un élément 12 de la chaîne de traction.

Dans la ligne de dérivation 220, la deuxième fraction de fluide caloporteur préalablement refroidi dans le radiateur primaire 22 entre dans le radiateur secondaire 24. Le fluide caloporteur cède des calories au flux d'air extérieur, plus froid, et ressort du radiateur secondaire 24 à une température inférieure à celle observée au niveau de la sortie du radiateur primaire 22 et proche de la température du flux d'air extérieur FA1. Ce fluide caloporteur est ensuite envoyé vers la deuxième passe 352 du troisième échangeur thermique 35, qui est utilisé comme sous-refroidisseur, dans lequel il capte les calories du fluide réfrigérant, plus chaud, issu du deuxième échangeur thermique 34. La température du fluide réfrigérant circulant dans la première passe 351 du troisième échangeur thermique 35 est ainsi abaissée à une température proche de la température du flux d'air extérieur FA1. Le fluide caloporteur circule ensuite sur la ligne principale 200 de sorte à permettre, notamment, le refroidissement de l'au moins un élément 12 de la chaîne de traction électrique.

Une telle architecture du système de traitement thermique 1 assure deux refroidissements successifs de la deuxième fraction de fluide caloporteur de sorte à en abaisser davantage la température, optimisant ainsi le sous-refroidissement du fluide réfrigérant au niveau du troisième échangeur thermique 35. En effet, à l'entrée du radiateur secondaire 24, la deuxième fraction de fluide caloporteur présente une température inférieure à celle qui pourrait être observée, en ce même point, dans le quatrième mode de réalisation tel que précédemment exposé en référence à la figure 7. Le pincement de température entre le fluide caloporteur et le flux d'air extérieur FA1 dans le radiateur secondaire 24 est ainsi réduit par rapport au quatrième mode de réalisation. Le cheminement de la deuxième fraction de fluide caloporteur est ainsi comparable à la circulation d'un fluide dans un échangeur thermique comprenant deux nappes disposées à contre-courant, ce qui est thermiquement plus efficace.

La présente invention propose ainsi un système de traitement thermique d'un véhicule comprenant au moins un circuit de fluide réfrigérant dans lequel un premier échangeur thermique, un deuxième échangeur thermique et un troisième échangeur thermique sont disposés entre un dispositif de compression et un organe de détente dudit circuit, au moins le deuxième échangeur thermique et/ou le troisième échangeur thermique étant configuré(s) pour fonctionner en tant que sous-refroidisseur de sorte à pouvoir assurer le sous-refroidissement du fluide réfrigérant en vue de l'amélioration du coefficient de performance du système dans son ensemble. Le système de traitement thermique comprend également au moins une boucle de fluide caloporteur comportant au moins un radiateur primaire disposé en face avant du véhicule, en amont du premier échangeur thermique du circuit selon le sens de circulation d'un flux d'air extérieur à l'habitacle du véhicule.

La présente invention ne saurait toutefois se limiter aux moyens et configurations décrits et illustrés ici et elle s'étend également à tout système entrant dans le cadre défini par les revendications. En particulier, l'architecture de la boucle de circulation du fluide caloporteur et l'architecture du circuit de fluide réfrigérant peuvent être modifiées sans nuire à l'invention dans la mesure où elles entrent dans le cadre défini par les revendications.

## Revendications

1. Système de traitement thermique (1) destiné à un véhicule comprenant au moins un circuit (3) de fluide réfrigérant et au moins une boucle (2) de fluide caloporteur :
- le circuit (3) de fluide réfrigérant comprenant au moins un dispositif de compression (31), un organe de détente (32), un premier échangeur thermique (33) configuré pour mettre en œuvre un échange thermique entre le fluide réfrigérant et un flux d'air extérieur (FA1) à un habitacle du véhicule, un deuxième échangeur thermique (34) configuré pour mettre en œuvre un échange thermique entre le fluide réfrigérant et le fluide caloporteur circulant dans la boucle (2) et un quatrième échangeur thermique (36) configuré pour mettre en œuvre un échange thermique entre le fluide réfrigérant et un flux d'air intérieur (FA2) à l'habitacle ;
- la boucle (2) de fluide caloporteur comprenant, sur une ligne principale (200), le deuxième échangeur thermique (34) et au moins un radiateur primaire (22) configuré pour mettre en œuvre un échange de chaleur entre le flux d'air extérieur (FA1) à l'habitacle du véhicule et le fluide caloporteur ;
**caractérisé en ce que** le circuit (3) de fluide réfrigérant comprend un troisième échangeur thermique (35) configuré pour mettre en œuvre un échange thermique entre le fluide réfrigérant et le flux d'air extérieur (FA1) ou entre le fluide réfrigérant et le fluide caloporteur et **en ce que** le premier échangeur thermique (33), le deuxième échangeur thermique (34) et le troisième échangeur thermique (35) sont disposés dans le circuit (3) de fluide réfrigérant entre une sortie du dispositif de compression (31) et une entrée du moyen de détente (32), le radiateur primaire (22) étant disposé en amont du premier échangeur thermique (33) selon un sens de circulation (S3) du flux d'air extérieur (FA1).

2. Système de traitement thermique (1) selon la revendication précédente, dans lequel le deuxième échangeur thermique (34) et le radiateur primaire (22) sont disposés dans la ligne principale (200) de la boucle (2) de fluide caloporteur de manière à ce que le radiateur primaire (22) décharge dans le flux d'air extérieur (FA1) des calories captées par le deuxième échangeur thermique (34).

3. Système de traitement selon l'une quelconque des revendications précédentes, dans lequel la boucle (2) de fluide caloporteur est thermiquement couplée à au moins un élément (12) d'une chaîne de traction électrique du véhicule.

4. Système de traitement thermique (1) selon l'une quelconque des revendications précédentes, dans lequel le circuit (3) de fluide réfrigérant est un circuit fermé comprenant au moins une branche principale (300) sur laquelle sont successivement agencés au moins le dispositif de compression (31), le premier échangeur thermique (33), le deuxième échangeur thermique (34), le troisième échangeur thermique (35), l'organe de détente 32, appelé premier organe de détente (32), et le quatrième échangeur thermique (36), le circuit (3) de fluide réfrigérant comprenant une deuxième branche (310) qui s'étend depuis un point de divergence (311), disposé entre une sortie du troisième échangeur thermique (35) et une entrée du quatrième échangeur thermique (36), et un point de convergence (312), disposé entre une sortie du quatrième échangeur thermique (36) et une entrée du dispositif de compression (31), la deuxième branche 310 comprenant au moins un organe de détente, appelé deuxième organe de détente (313), et un cinquième échangeur thermique (314) thermiquement couplé à un dispositif de stockage électrique (11) du véhicule.

5. Système de traitement thermique (1) selon la revendication précédente, dans lequel le circuit (3) de fluide réfrigérant comprend une troisième branche (320) qui s'étend entre un point de divergence, appelé deuxième point de divergence (321), disposé entre la sortie du dispositif de compression (31) et une entrée du premier échangeur thermique (33), et un point de convergence, appelé deuxième point de convergence (322), disposé entre la sortie du troisième échangeur thermique (35) et l'entrée du quatrième échangeur thermique (36), la troisième branche (320) comprenant au moins un échangeur de chaleur (323) utilisé comme condenseur, le circuit (3) de fluide réfrigérant comprenant une quatrième branche (330) qui s'étend entre un point de divergence, appelé troisième point de divergence (331), disposé entre la sortie du troisième échangeur thermique (35) et l'entrée du quatrième échangeur thermique (36), et un point de convergence, appelé troisième point de convergence (332), disposé entre la sortie du dispositif de compression (31) et l'entrée du premier échangeur thermique (33), la quatrième branche (330) comprenant au moins un organe de détente dit troisième organe de détente (333).

6. Système de traitement thermique (1) selon l'une quelconque des revendications précédentes, dans lequel le circuit (3) de fluide réfrigérant comprend une cinquième branche (360) qui s'étend entre un point de divergence, appelé quatrième point de divergence (361), disposé entre une sortie du deuxième échangeur thermique (34) et une entrée du troisième échangeur thermique (35), et un point convergence, appelé quatrième point de convergence (362), disposé entre la sortie du quatrième échangeur thermique (36) et l'entrée du dispositif de compression (31).

7. Système de traitement thermique (1) selon l'une quelconque des revendications précédentes, dans lequel le troisième échangeur thermique (35) est configuré pour mettre en œuvre un échange thermique entre le fluide réfrigérant et le flux d'air extérieur (FA1) à l'habitacle et dans lequel le troisième échangeur thermique (35) est disposé en amont du premier échangeur thermique (33) selon le sens de circulation (S3) du flux d'air extérieur (FA1) à l'habitacle.

8. Système de traitement thermique (1) selon la revendication précédente, dans lequel la boucle (2) de fluide caloporteur comprend une deuxième ligne (210) qui s'étend en dérivation de la ligne principale (200) entre un point de dérivation (201), disposé entre une sortie de l'élément de mise en circulation (21) et une entrée du radiateur primaire (22), et un point de raccordement (202), disposé entre une sortie du radiateur primaire (22) et l'entrée du deuxième échangeur thermique (34), la deuxième ligne (210) comprenant au moins un organe de contrôle (23) du débit de fluide caloporteur.

9. Système de traitement thermique (1) selon l'une quelconque des revendications 1 à 6, dans lequel le troisième échangeur thermique (35) est configuré pour mettre en œuvre un échange thermique entre le fluide réfrigérant et le fluide caloporteur.

10. Système de traitement thermique (1) selon la revendication précédente, dans lequel la boucle (2) de fluide caloporteur comprend une ligne de dérivation (220) qui comporte au moins le troisième échangeur thermique (35) et un radiateur secondaire (24) configuré pour mettre en œuvre un échange thermique entre le fluide caloporteur et le flux d'air extérieur (FA1), le radiateur secondaire (24) étant disposé en amont du radiateur primaire (22) selon le sens de circulation (S3) du flux d'air extérieur (FA1) à l'habitacle.

11. Système de traitement thermique (1) selon la revendication précédente, dans lequel la ligne de dérivation (220) s'étend entre un point de séparation (221), disposé entre la sortie de l'élément de mise en circulation (21) du fluide caloporteur et l'entrée du radiateur primaire (22), et un point de jonction (222), disposé entre une sortie du deuxième échangeur thermique (34) et une entrée de l'élément de mise en circulation (21).

12. Système de traitement thermique (1) selon la revendication 10 ou 11, dans lequel la boucle (2) de fluide caloporteur comprend une deuxième ligne (210) qui s'étend en dérivation de la ligne principale (200) entre un point de dérivation (201), disposé entre une sortie de l'élément de mise en circulation (21) et une entrée du radiateur primaire (22), et un point de raccordement (202), disposé entre une sortie du radiateur primaire (22) et l'entrée du deuxième échangeur thermique (34), la deuxième ligne (210) comprenant au moins un organe de contrôle (23) du débit de fluide caloporteur.

13. Système de traitement thermique (1) selon la revendication 10, dans lequel la ligne de dérivation (220) s'étend entre un point de séparation (221), disposé entre la sortie du radiateur primaire (22) et l'entrée du deuxième échangeur thermique (34), et un point de jonction (222), disposé entre la sortie du deuxième échangeur thermique (34) et l'entrée de l'élément de mise en circulation (21).

## Patentansprüche

1. Wärmebehandlungssystem (1), das für ein Fahrzeug bestimmt ist und mindestens einen Kältemittelkreislauf (3) und mindestens eine Wärmeträgerfluidschleife (2) beinhaltet:
- wobei der Kältemittelkreislauf (3) mindestens Folgendes beinhaltet: eine Kompressionsvorrichtung (31), ein Expansionsorgan (32), einen ersten Wärmetauscher (33), der dazu konfiguriert ist, einen Wärmeaustausch zwischen dem Kältemittel und einem in Bezug auf den Fahrgastraum des Fahrzeugs externen Luftstrom (FA1) zu realisieren, einen zweiten Wärmetauscher (34), der dazu konfiguriert ist, einen Wärmeaustausch zwischen dem Kältemittel und dem Wärmeträgerfluid, das in der Schleife (2) zirkuliert, zu realisieren, und einen vierten Wärmetauscher (36), der dazu konfiguriert ist, einen Wärmeaustausch zwischen dem Kältemittel und einem in Bezug auf den Fahrgastraum internen Luftstrom (FA2) zu realisieren;
- wobei die Wärmeträgerfluidschleife (2) in einer Hauptleitung (200) den zweiten Wärmetauscher (34) und mindestens einen Primärkühler (22), der dazu konfiguriert ist, einen Austausch von Wärme zwischen dem in Bezug auf den Fahrgastraum des Fahrzeugs externen Luftstrom (FA1) und dem Wärmeträgerfluid zu realisieren, beinhaltet; **dadurch gekennzeichnet, dass** der Kältemittelkreislauf (3) einen dritten Wärmetauscher (35) beinhaltet, der dazu konfiguriert ist, einen Wärmeaustausch zwischen dem Kältemittel und dem externen Luftstrom (FA1) oder zwischen dem Kältemittel und dem Wärmeträgerfluid zu realisieren, und dass der erste Wärmetauscher (33), der zweite Wärmetauscher (34) und der dritte Wärmetauscher (35) in dem Kältemittelkreislauf (3) zwischen einem Ausgang der Kompressionsvorrichtung (31) und einem Eingang des Expansionsmittels (32) angeordnet sind, wobei der Primärkühler (22) gemäß einer Zirkulationsrichtung (S3) des externen Luftstroms (FA1) stromaufwärts des ersten Wärmetauschers (33) angeordnet ist.

2. Wärmebehandlungssystem (1) nach dem vorhergehenden Anspruch, wobei der zweite Wärmetauscher (34) und der Primärkühler (22) derart in der Hauptleitung (200) der Wärmeträgerfluidschleife (2) angeordnet sind, dass der Primärkühler (22) Kalorien, die durch den zweiten Wärmetauscher (34) aufgenommen werden, an den externen Luftstrom (FA1) abgibt.

3. Behandlungssystem nach einem der vorhergehenden Ansprüche, wobei die Wärmeträgerfluidschleife (2) mit mindestens einem Element (12) eines elektrischen Antriebsstrangs des Fahrzeugs thermisch gekoppelt ist.

4. Wärmebehandlungssystem (1) nach einem der vorhergehenden Ansprüche, wobei der Kältemittelkreislauf (3) ein geschlossener Kreislauf ist, der mindestens einen Hauptzweig (300) beinhaltet, in dem nacheinander mindestens die Kompressionsvorrichtung (31), der erste Wärmetauscher (33), der zweite Wärmetauscher (34), der dritte Wärmetauscher (35), das Expansionsorgan (32), als erstes Expansionsorgan (32) bezeichnet, und der vierte Wärmetauscher (36) eingerichtet sind, wobei der Kältemittelkreislauf (3) einen zweiten Zweig (310) beinhaltet, der sich von einem Divergenzpunkt (311), der zwischen einem Ausgang des dritten Wärmetauschers (35) und einem Eingang des vierten Wärmetauschers (36) angeordnet ist, und einem Konvergenzpunkt (312), der zwischen einem Ausgang des vierten Wärmetauschers (36) und einem Eingang der Kompressionsvorrichtung (31) angeordnet ist, erstreckt, wobei der zweite Zweig (310) mindestens ein Expansionsorgan, als zweites Expansionsorgan (313) bezeichnet, und einen fünften Wärmetauscher (314), der mit einer elektrischen Speichervorrichtung (11) des Fahrzeugs thermisch gekoppelt ist, beinhaltet.

5. Wärmebehandlungssystem (1) nach dem vorhergehenden Anspruch, wobei der Kältemittelkreislauf (3) einen dritten Zweig (320) beinhaltet, der sich zwischen einem Divergenzpunkt, als zweiter Divergenzpunkt (321) bezeichnet, der zwischen dem Ausgang der Kompressionsvorrichtung (31) und einem Eingang des ersten Wärmetauschers (33) angeordnet ist, und einem Konvergenzpunkt, als zweiter Konvergenzpunkt (322) bezeichnet, der zwischen dem Ausgang des dritten Wärmetauschers (35) und dem Eingang des vierten Wärmetauschers (36) angeordnet ist, erstreckt, wobei der dritte Zweig (320) mindestens einen Wärmetauscher (323) beinhaltet, der als Kondensator verwendet wird, wobei der Kältemittelkreislauf (3) einen vierten Zweig (330) beinhaltet, der sich zwischen einem Divergenzpunkt, als dritter Divergenzpunkt (331) bezeichnet, der zwischen dem Ausgang des dritten Wärmetauschers (35) und dem Eingang des vierten Wärmetauschers (36) angeordnet ist, und einem Konvergenzpunkt, als dritter Konvergenzpunkt (332) bezeichnet, der zwischen dem Ausgang der Kompressionsvorrichtung (31) und dem Eingang des ersten Wärmetauschers (33) angeordnet ist, erstreckt, wobei der vierte Zweig (330) mindestens ein Expansionsorgan, als drittes Expansionsorgan (333) bezeichnet, beinhaltet.

6. Wärmebehandlungssystem (1) nach einem der vorhergehenden Ansprüche, wobei der Kältemittelkreislauf (3) einen fünften Zweig (360) beinhaltet, der sich zwischen einem Divergenzpunkt, als vierter Divergenzpunkt (361) bezeichnet, der zwischen einem Ausgang des zweiten Wärmetauschers (34) und einem Eingang des dritten Wärmetauschers (35) angeordnet ist, und einem Konvergenzpunkt, als vierter Konvergenzpunkt (362) bezeichnet, der zwischen dem Ausgang des vierten Wärmetauschers (36) und dem Eingang der Kompressionsvorrichtung (31) angeordnet ist, erstreckt.

7. Wärmebehandlungssystem (1) nach einem der vorhergehenden Ansprüche, wobei der dritte Wärmetauscher (35) dazu konfiguriert ist, einen Wärmeaustausch zwischen dem Kältemittel und dem in Bezug auf den Fahrgastraum externen Luftstrom (FA1) zu realisieren und wobei der dritte Wärmetauscher (35) gemäß der Zirkulationsrichtung (S3) des in Bezug auf den Fahrgastraum externen Luftstroms (FA1) stromaufwärts des ersten Wärmetauschers (33) angeordnet ist.

8. Wärmebehandlungssystem (1) nach dem vorhergehenden Anspruch, wobei die Wärmeträgerfluidschleife (2) eine zweite Leitung (210) beinhaltet, die sich als eine Abzweigung zu der Hauptleitung (200) zwischen einem Abzweigungspunkt (201), der zwischen einem Ausgang des Elements zum Zirkulieren (21) und einem Eingang des Primärkühlers (22) angeordnet ist, und einem Anschlusspunkt (202), der zwischen einem Ausgang des Primärkühlers (22) und dem Eingang des zweiten Wärmetauschers (34) angeordnet ist, erstreckt, wobei die zweite Leitung (210) mindestens ein Steuerorgan (23) für den Wärmeträgerfluiddurchsatz beinhaltet.

9. Wärmebehandlungssystem (1) nach einem der Ansprüche 1 bis 6, wobei der dritte Wärmetauscher (35) dazu konfiguriert ist, einen Wärmeaustausch zwischen dem Kältemittel und dem Wärmeträgerfluid zu realisieren.

10. Wärmebehandlungssystem (1) nach dem vorhergehenden Anspruch, wobei die Wärmeträgerfluidschleife (2) eine Abzweigungsleitung (220) beinhaltet, die mindestens den dritten Wärmetauscher (35) und einen Sekundärkühler (24), der dazu konfiguriert ist, einen Wärmeaustausch zwischen dem Wärmeträgerfluid und dem externen Luftstrom (FA1) zu realisieren, umfasst, wobei der Sekundärkühler (24) gemäß der Zirklulationsrichtung (S3) des in Bezug auf den Fahrgastraum externen Luftstroms (FA1) stromaufwärts des Primärkühlers (22) angeordnet ist.

11. Wärmebehandlungssystem (1) nach dem vorhergehenden Anspruch, wobei sich die Abzweigungsleitung (220) zwischen einem Trennungspunkt (221), der zwischen dem Ausgang des Elements zum Zirkulieren (21) des Wärmeträgerfluids und dem Eingang des Primärkühlers (22) angeordnet ist, und einem Verbindungspunkt (222), der zwischen einem Ausgang des zweiten Wärmetauschers (34) und einem Eingang des Elements zum Zirkulieren (21) angeordnet ist, erstreckt.

12. Wärmebehandlungssystem (1) nach Anspruch 10 oder 11, wobei die Wärmeträgerfluidschleife (2) eine zweite Leitung (210) beinhaltet, die sich als eine Abzweigung zu der Hauptleitung (200) zwischen einem Abzweigungspunkt (201), der zwischen einem Ausgang des Elements zum Zirkulieren (21) und einem Eingang des Primärkühlers (22) angeordnet ist, und einem Anschlusspunkt (202), der zwischen einem Ausgang des Primärkühlers (22) und dem Eingang des zweiten Wärmetauschers (34) angeordnet ist, erstreckt, wobei die zweite Leitung (210) mindestens ein Steuerorgan (23) für den Wärmeträgerfluiddurchsatz beinhaltet.

13. Wärmebehandlungssystem (1) nach Anspruch 10, wobei sich die Abzweigungsleitung (220) zwischen einem Trennungspunkt (221), der zwischen dem Ausgang des Primärkühlers (22) und dem Eingang des zweiten Wärmetauschers (34) angeordnet ist, und einem Verbindungspunkt (222), der zwischen dem Ausgang des zweiten Wärmetauschers (34) und dem Eingang des Elements zum Zirkulieren (21) angeordnet ist, erstreckt.

## Claims

1. Thermal treatment system (1) intended for a vehicle comprising at least one refrigerant circuit (3) and at least one heat transfer fluid loop (2):
- the refrigerant circuit (3) comprising at least one compression device (31), one expansion member (32), one first heat exchanger (33) configured to exchange heat between the refrigerant and an air flow (FA1) external to an interior of the vehicle, one second heat exchanger (34) configured to exchange heat between the refrigerant and the heat transfer fluid circulating in the loop (2) and one fourth heat exchanger (36) configured to exchange heat between the refrigerant and an air flow (FA2) internal to the interior;
- the heat transfer fluid loop (2) comprising, on a main line (200), the second heat exchanger (34) and at least one primary radiator (22) configured to exchange heat between the air flow (FA1) external to the interior of the vehicle and the heat transfer fluid;
**characterized in that** the refrigerant circuit (3) comprises a third heat exchanger (35) configured to exchange heat between the refrigerant and the external air flow (FA1) or between the refrigerant and the heat transfer fluid and **in that** the first heat exchanger (33), the second heat exchanger (34) and the third heat exchanger (35) are disposed in the refrigerant circuit (3) between an outlet of the compression device (31) and an inlet of the expansion means (32), the primary radiator (22) being disposed upstream of the first heat exchanger (33) according to a direction of circulation (S3) of the external air flow (FA1).

2. Thermal treatment system (1) according to the preceding claim, wherein the second heat exchanger (34) and the primary radiator (22) are disposed in the main line (200) of the heat transfer fluid loop (2) such that the primary radiator (22) discharges heat energy captured by the second heat exchanger (34) into the external air flow (FA1).

3. Treatment system according to any one of the preceding claims, wherein the heat transfer fluid loop (2) is thermally coupled to at least one element (12) of an electric powertrain of the vehicle.

4. Thermal treatment system (1) according to any one of the preceding claims, wherein the refrigerant circuit (3) is a closed circuit comprising at least one main leg (300) on which at least the compression device (31), the first heat exchanger (33), the second heat exchanger (34), the third heat exchanger (35), the expansion member (32), referred to as the first expansion member (32), and the fourth heat exchanger (36) are successively arranged, the refrigerant circuit (3) comprising a second leg (310) which extends from a point of divergence (311), disposed between an outlet of the third heat exchanger (35) and an inlet of the fourth heat exchanger (36), and a point of convergence (312), disposed between an outlet of the fourth heat exchanger (36) and an inlet of the compression device (31), the second leg (310) comprising at least one expansion member, referred to as the second expansion member (313), and one fifth heat exchanger (314) thermally coupled to an electrical storage device (11) of the vehicle.

5. Thermal treatment system (1) according to the preceding claim, wherein the refrigerant circuit (3) comprises a third leg (320) which extends between a point of divergence, referred to as the second point of divergence (321), disposed between the outlet of the compression device (31) and an inlet of the first heat exchanger (33), and a point of convergence, referred to as the second point of convergence (322), disposed between the outlet of the third heat exchanger (35) and the inlet of the fourth heat exchanger (36), the third leg (320) comprising at least one heat exchanger (323) used as a condenser, the refrigerant circuit (3) comprising a fourth leg (330) which extends between a point of divergence, referred to as the third point of divergence (331), disposed between the outlet of the third heat exchanger (35) and the inlet of the fourth heat exchanger (36), and a point of convergence, referred to as the third point of convergence (332), disposed between the outlet of the compression device (31) and the inlet of the first heat exchanger (33), the fourth leg (330) comprising at least one expansion member referred to as the third expansion member (333).

6. Thermal treatment system (1) according to any one of the preceding claims, wherein the refrigerant circuit (3) comprises a fifth leg (360) which extends between a point of divergence, referred to as the fourth point of divergence (361), disposed between an outlet of the second heat exchanger (34) and an inlet of the third heat exchanger (35), and a point of convergence, referred to as the fourth point of convergence (362), disposed between the outlet of the fourth heat exchanger (36) and the inlet of the compression device (31).

7. Thermal treatment system (1) according to any one of the preceding claims, wherein the third heat exchanger (35) is configured to exchange heat between the refrigerant and the air flow (FA1) external to the interior, and wherein the third heat exchanger (35) is disposed upstream of the first heat exchanger (33) according to the direction of circulation (S3) of the air flow (FA1) external to the interior.

8. Thermal treatment system (1) according to the preceding claim, wherein the heat transfer fluid loop (2) comprises a second line (210) which branches off from the main line (200) between a branch point (201), disposed between an outlet of the circulation element (21) and an inlet of the primary radiator (22), and a connection point (202), disposed between an outlet of the primary radiator (22) and the inlet of the second heat exchanger (34), the second line (210) comprising at least one member (23) for controlling the heat transfer fluid flow.

9. Thermal treatment system (1) according to any one of Claims 1 to 6, wherein the third heat exchanger (35) is configured to exchange heat between the refrigerant and the heat transfer fluid.

10. Thermal treatment system (1) according to the preceding claim, wherein the heat transfer fluid loop (2) comprises a branch line (220) which has at least the third heat exchanger (35) and a secondary radiator (24) configured to exchange heat between the heat transfer fluid and the external air flow (FA1), the secondary radiator (24) being disposed upstream of the primary radiator (22) according to the direction of circulation (S3) of the air flow (FA1) external to the interior.

11. Thermal treatment system (1) according to the preceding claim, wherein the branch line (220) extends between a separation point (221), disposed between the outlet of the element (21) for circulating the heat transfer fluid and the inlet of the primary radiator (22), and a joining point (222), disposed between an outlet of the second heat exchanger (34) and an inlet of the circulation element (21).

12. Thermal treatment system (1) according to Claim 10 or 11, wherein the heat transfer fluid loop (2) comprises a second line (210) which branches off from the main line (200) between a branch point (201), disposed between an outlet of the circulation element (21) and an inlet of the primary radiator (22), and a connection point (202), disposed between an outlet of the primary radiator (22) and the inlet of the second heat exchanger (34), the second line (210) comprising at least one member (23) for controlling the heat transfer fluid flow.

13. Thermal treatment system (1) according to Claim 10, wherein the branch line (220) extends between a separation point (221), disposed between the outlet of the primary radiator (22) and the inlet of the second heat exchanger (34), and a joining point (222), disposed between the outlet of the second heat exchanger (34) and the inlet of the circulation element (21).
